# EUROPÄISCHE PATENTSCHRIFT

(11) **EP 3 907 129 B1**
(45) Veröffentlichungstag und Bekanntmachung des Hinweises auf die Patenterteilung: **02.07.2025**
(21) Anmeldenummer: 21172756.5
(22) Anmeldetag: 07.05.2021
(51) Int. Cl.: B64C 1/06

(54) **VERBINDER UND VERFAHREN ZUM VERBINDEN EINES SPANTS UND EINES STRINGERS EINER RUMPFSTRUKTUR EINES LUFTFAHRZEUGS, RUMPFSTRUKTUR UND LUFTFAHRZEUG**
CONNECTOR AND METHOD FOR CONNECTING A FRAME AND A STRINGER OF A FUSELAGE STRUCTURE OF AN AIRCRAFT, FUSELAGE STRUCTURE AND AIRCRAFT
CONNECTEUR ET PROCÉDÉ DE CONNEXION D'UN CADRE ET D'UN LONGERON D'UNE STRUCTURE DE FUSELAGE D'UN AÉRONEF, STRUCTURE DE FUSELAGE ET AÉRONEF

(30) Priorität: 08.05.2020 DE 102020205840
(43) Veröffentlichungstag der Anmeldung: 10.11.2021
(73) Patentinhaber: Premium AEROTEC GmbH, 86179 Augsburg (DE)
(72) Erfinder: HAACK, Cord, 86179 Augsburg (DE); PAUL, Carsten, 86179 Augsburg (DE); HÖRGER, Bernhard, 86179 Augsburg (DE)
(74) Vertreter: LKGLOBAL Lorenz & Kopf Patentanwalt Attorney at Law PartG mbB

(56) Entgegenhaltungen:
- US-A- 2 389 767
- US-A1- 2018 162 510
- US-B2- 8 087 621
- US-B2- 8 480 030
- US-B2- 8 622 348
- US-B2- 8 915 468

## Beschreibung

Die vorliegende Erfindung betrifft einen Verbinder und ein Verfahren zum Verbinden eines Spants und eines Stringers einer Rumpfstruktur eines Luftfahrzeugs, eine Rumpfstruktur für ein Luftfahrzeug und ein Luftfahrzeug.

Ein Rumpf eines Luftfahrzeugs weist typischerweise eine Rumpfstruktur auf, welche mehrere parallel zueinander angeordnete, eine Rumpflängsachse umschließende Spante und sich entlang der Rumpflängsachse erstreckende Stringer umfasst. Eine Außenhaut wird in der Regel an den Stringern und den Spanten befestigt. Spante existieren in verschiedenen Querschnittsformen, z.B. als Z-Profile oder als T-Profile. Spante weisen in der Regel zudem Stringerausnehmungen auf, durch welche hindurch sich die Stringer erstrecken.

Die Spante und die Stringer sind typischerweise mittels Verbindern aneinander befestigt. In der US 3 600 016 A beispielsweise wird ein winkelförmiger Verbinder beschrieben, der an dem Spant und dem Stringer, welcher S-förmig ausgebildet ist, jeweils mittels Nieten befestigt ist. Ein weiterer Verbinder ist in der EP 2 212 191 B1 beschrieben, wobei der Verbinder einen mit einem Stringer verbundenen Fußflansch und einen sich quer zu diesem erstreckenden Spantflansch aufweist, welcher mit einem Spant verbunden ist, wobei Fuß- und Spantflansch jeweils Bohrungen zur Durchführung von Nieten oder anderen Verbindungselementen aufweisen.

Eine weitere Rumpfstruktur wird in der EP 2 301 840 B1 beschrieben, wobei die Rumpfstruktur Ω-förmige Stringer und ringförmige Spante mit C-förmigem Querschnitt aufweist, welche sich über die Stringer hinweg erstrecken, und wobei L-förmige Stützelemente vorgesehen sind, welche durch Nieten mit einem Fuß des Stringers und dem Spant verbunden sind.

US 2389767 befasst sich mit der Befestigung von Spanten und Stringern mit der Außenhaut eines Luftfahrzeugs in deren Kreuzungspunkt. Die Spanten und Stringer sind als Fachwerkträger ausgebildet. US 2018/162510 A1 beschreibt, gemäß der Übersetzung der Zusammenfassung in Espacenet, eine Karosserie eines mobilen Fahrzeugs. Der Körper umfasst eine Haut, einen Stringer und einen Rahmen. Die Haut umfasst eine erste Lasche und eine zweite Lasche gegenüber der ersten Lasche. Die erste Lasche wird direkt auf der Haut fixiert und die zweite Lasche wird direkt auf der Haut fixiert. Der Rahmen umfasst einen Ausschnitt, einen ersten Fuß und einen zweiten Fuß. Der zweite Fuß ist durch den Ausschnitt vom ersten Fuß beabstandet. Der erste Fuß wird direkt an der ersten Lasche des Stringers befestigt, so dass die erste Lasche des Stringers unmittelbar zwischen dem ersten Fuß des Rahmens und der Haut angeordnet ist. Der zweite Fuß wird direkt auf der Haut befestigt, so dass kein Teil des Rahmens direkt auf der zweiten Lasche des Stringers befestigt wird. US 8480030 B2 beschreibt, gemäß der Übersetzung der Zusammenfassung in Espacenet, ein Strukturbauteil für ein Luft- oder Raumfahrzeug mit einer Außenhaut und einem entlang einer ersten Raumrichtung auf der Außenhaut verlaufenden ersten Verstärkungselement bereit. Ein zweites Verstärkungselement läuft in einer zweiten Raumrichtung über das erste Verstärkungselement. Ein Fußelement stützt das zweite Verstärkungselement an der Außenhaut ab, wobei das Fußelement eine Durchgangsöffnung aufweist, in der das erste Verstärkungselement formschlüssig gehalten ist. Unter einem anderen Gesichtspunkt wird ein Verfahren zum Verstärken einer Außenhaut eines Luft- oder Raumfahrzeugs bereitgestellt, bei dem ein erstes Verstärkungselement entlang einer ersten Raumrichtung an der Außenhaut angebracht wird. Über dem ersten Verstärkungselement ist ein Fußelement mit einer Durchgangsöffnung angebracht, so dass das erste Verstärkungselement formschlüssig in der Durchgangsöffnung gehalten wird. Ein zweites Verstärkungselement ist in einer zweiten Raumrichtung über dem ersten Verstärkungselement an dem Fußelement angebracht. US 8087621 B2 beschreibt, gemäß der Übersetzung der Zusammenfassung in Espacenet, eine Halterung zur loch- und weitgehend werkzeuglosen Befestigung aller Arten von Bauteilen, insbesondere Leitungen, innerhalb einer herkömmlichen Rumpfstruktur eines Flugzeugs mit Stringern und Ringspants, wobei die Spante an Kreuzungspunkten jeweils mit einem Winkel versehen sind einen Stringer und einen ringförmigen Spant. Der Halter ist zweigeteilt mit einem Unterteil und einem damit verbindbaren Oberteil ausgebildet, wobei das Unterteil auf einen Winkel aufschiebbar ist. Durch das Aufstecken des Oberteils auf das Unterteil wird der Halter an der Kreuzungsstelle im oberen Bereich eines Ringspants lagefixiert. Die Fixierung in seiner endgültigen Position erfolgt durch die Verbindung des Halters mit einem Querleitungshalter als Funktionselement mittels Spreizstift oder anderen Verbindungselementen. Andere alternative Funktionselemente zur Fixierung der Bauteile, wie beispielsweise eine Längsleinenhalterung, eine Querlatte oder eine Längslatte für spezielle Installationsanforderungen, können bei Bedarf mit mindestens einem Halter kombiniert werden, um eine Halteranordnung mit beliebigem Grad der Komplexität zu bilden.

Es ist Aufgabe der vorliegenden Erfindung, verbesserte Lösungen für Rumpfstrukturen mit Stringern und Spanten zu finden, insbesondere Lösungen, die eine Montage der Rumpfstruktur vereinfachen.

Diese Aufgabe wird jeweils durch die Gegenstände der unabhängigen Ansprüche gelöst. Vorteilhafte Ausgestaltungen und Weiterbildungen ergeben sich aus den auf die unabhängigen Ansprüche rückbezogenen Unteransprüchen in Verbindung mit der Beschreibung.

Gemäß einem ersten Aspekt der Erfindung ist ein Verbinder zum Verbinden eines Spants mit einem sich quer zu diesem erstreckenden Stringer einer Rumpfstruktur eines Luftfahrzeugs vorgesehen. Der Verbinder umfasst einen sich in einer Verbinderlängsrichtung erstreckenden Basisträger, einen mit dem Basisträger verbundenen und sich in einer ersten Verbinderquerrichtung erstreckenden ersten Verbindungsabschnitt, welcher in einem von dem Basisträger abgewandten Endbereich eine Kopplungsstruktur zum Umgreifen eines Endbereichs eines Querschnitts des Stringers aufweist, und einen mit dem Basisträger verbundenen zweiten Verbindungsabschnitt, welcher zur Verbindung mit dem Spant ausgebildet ist. Die erste Verbinderquerrichtung verläuft quer zur Verbinderlängsrichtung.

Nach einem zweiten Aspekt der Erfindung ist eine Rumpfstruktur für ein Luftfahrzeug vorgesehen. Die Rumpfstruktur umfasst einen eine Rumpflängsachse umschließenden, insbesondere ringförmigen, Spant, welcher eine Stringerausnehmung aufweist, einen sich entlang der Rumpflängsachse durch die Stringerausnehmung des Spants hindurch erstreckenden Stringer und einen Verbinder nach dem ersten Aspekt der Erfindung. Der erste Verbindungsabschnitt des Verbinders umgreift mit der Kopplungsstruktur einen Endbereich eines Querschnitts des Stringers. Der zweite Verbindungsabschnitt des Verbinders ist mit dem Spant verbunden.

Nach einem dritten Aspekt der Erfindung ist ein Verfahren zum Verbinden eines Spants und eines Stringers einer Rumpfstruktur nach dem zweiten Aspekt der Erfindung vorgesehen. Das Verfahren umfasst ein Einführen des Endbereichs des Querschnitts des Stringers in die Kopplungsstruktur des ersten Verbindungsabschnitts des Verbinders, ein Positionieren des zweiten Verbindungsabschnitts des Verbinders an dem Spant und ein Verbinden des zweiten Verbindungsabschnitts des Verbinders mit dem Spant.

Eine der Erfindung zugrundeliegende Idee besteht darin, einen Spant und einen Stringer einer Rumpfstruktur an deren Kreuzungspunkt mittels eines Verbinders aneinander zu befestigen, welcher zumindest mit dem Stringer formschlüssig verbindbar ist. Hierzu weist der Verbinder einen ersten Verbindungsabschnitt mit einer Kopplungsstruktur auf, welche zum Umgreifen eines Endes des Querschnitts des Stringers ausgebildet ist. Die Kopplungsstruktur kann beispielsweise hakenförmig ausgebildet sein und definiert durch deren Hakenform einen einseitig offenen, z.B. U-förmigen, Schlitz, in welchen ein Ende eines Stegs des Stringers eingeschoben werden kann. Die Kopplungsstruktur umgreift damit einen Endbereich des Querschnitts des Stringers. Der erste Verbindungsabschnitt erstreckt sich quer zu einem Basisträger des Verbinders, welcher z.B. ein X-förmiges, ein H-förmiges oder ein anderes Querschnittsprofil aufweisen kann. Die Kopplungsstruktur ist an einem von dem Basisträger abgewandten Endbereich des Verbindungsabschnitts vorgesehen. Ferner kann die Kopplungsstruktur auch L-förmig mit einem ersten Abschnitt und einem sich quer zu diesem erstreckenden zweiten Abschnitt, welcher sich entlang der Verbinderlängsrichtung bzw. entlang des Basisträgers erstreckt. Somit kann sowohl bei der L-förmigen als auch bei der hakenförmigen Gestaltung der Kopplungsstruktur zwischen der Kopplungsstruktur und dem Basisträger ein Aufnahmebereich zur Aufnahme des Querschnitts des Stringers ausgebildet sein. Somit kann der Endbereich des Querschnitts des Stringers in dem durch die Hakenform der Kopplungsstruktur definierten Schlitz aufgenommen sein und/oder der Stringer kann zwischen der Kopplungsstruktur und dem Basisträger eingeklemmt sein.

Ein Vorteil des Verbinders liegt darin, dass durch die den Endbereich des Querschnitts des Stringers umgreifende Kopplungsstruktur eine formschlüssige Verbindung zwischen Stringer und Verbinder erzielt wird, welche auf einfache Weise durch Einführen des Endbereichs des Querschnitts des Stringers in die hakenförmige Kopplungsstruktur montierbar ist. Das Querschnittsprofil des Stringers kann gewissermaßen in die Kopplungsstruktur des Verbinders eingehakt bzw. geklemmt werden. Dies erleichtert insbesondere die Montage in dem unter Umständen schlecht zugänglichen Kreuzungsbereich von Spant und Stringer. Insbesondere ist ein Vernieten von Verbinder und Stringer nicht mehr zwangsläufig notwendig.

Gemäß der Erfindung ist der zweite Verbindungsabschnitt in einer zweiten Verbinderquerrichtung orientiert.

Die zweite Verbinderquerrichtung verläuft quer zur ersten Verbinderquerrichtung und quer zur Verbinderlängsrichtung. In einem montierten Zustand ist die erste Verbinderquerrichtung somit entlang des Spants und die zweite Verbinderquerrichtung entlang des Stringers bzw. quer zum Spant gerichtet. Der zweite Verbindungsabschnitt kann folglich in einer quer zum Spant gerichteten Richtung mit diesem gekoppelt werden. Dadurch wird eine Abstützung des Spants durch den zweiten Verbindungsabschnitt und eine Lastübertragung zwischen Spant und Stringer durch den Verbinder verbessert.

Gemäß der Erfindung ist vorgesehen, dass der zweite Verbindungsabschnitt in Bezug auf die Verbinderlängsrichtung in einem zweiten Endbereich des Basisträgers angeordnet ist und sich in der zweiten Verbinderquerrichtung erstreckt, und wobei der zweite Verbindungsabschnitt in einem von dem Basisträger abgewandten Endbereich eine beispielsweise L-förmige oder hakenförmige Kopplungsstruktur zum Umgreifen eines Endbereichs eines Querschnitts des Spants aufweist. Beispielsweise kann der zweite Verbindungsabschnitt einen Quersteg aufweisen, an dessen Ende ein hakenförmiger Umbug oder Fortsatz vorgesehen ist. Die Hakenform der Kopplungsstruktur des zweiten Verbindungsabschnitts definiert einen Schlitz, in welchen ein Ende eines Stegs des Spants eingeschoben werden kann. Bei der L-förmigen Struktur kann der Endbereich des Querschnitts Spant zwischen der Kopplungsstruktur und dem zweiten Endbereich des Basisträgers eingeklemmt werden. Somit kann auch der Spant in formschlüssiger Weise mit dem Verbinder verbunden werden, was die Montage weiter erleichtert.

Gemäß manchen Ausführungsformen des Verbinders kann vorgesehen sein, dass der zweite Verbindungsabschnitt einstückig mit dem Basisträger ausgebildet ist. In diesem Fall kann der zweite Verbindungsabschnitt, wenn dieser mit einer L- oder hakenförmige Kopplungsstruktur realisiert ist, insbesondere elastisch verformbar gestaltet sein, so dass die Kopplungsstruktur mit dem Spant verrastet werden kann.

Gemäß manchen Ausführungsformen des Verbinders kann vorgesehen sein, dass der zweite Verbindungsabschnitt einen Führungsbereich aufweist, welcher in einer Führung des Basisträgers in der Verbinderlängsrichtung verschiebbar geführt ist, und wobei die Führung eine erste Verriegelungsstruktur, insbesondere einen elastischen Steg, aufweist, welche in eine in dem Führungsbereich ausgebildete Verriegelungsstruktur, insbesondere in Form von Zähnen, eingreift. Beispielsweise kann der zweite Verbindungsabschnitt als Führungsbereich einen Steg aufweisen, welcher zwischen zwei Stegen des Basisträgers linear verschiebbar geführt ist. An dem Steg des zweiten Verbindungsabschnitts kann eine Zahnstruktur vorgesehen sein, welche mit einer elastischen Sperrklinke des Basisträgers verrastbar sind. Damit kann die Kopplungsstruktur in der Verbinderlängsrichtung verschoben und dadurch in Eingriff mit dem Spant gebracht werden. Durch die Verriegelungsstruktur kann die Position des zweiten Verbindungsabschnitts festgelegt werden.

Gemäß manchen Ausführungsformen kann der Verbinder einen plattenförmigen Klebstoffträger mit einer in der zweiten Verbinderquerrichtung orientierten Oberfläche aufweisen, welche mit einem Klebstoff beschichtet ist, wobei der Klebstoffträger in Bezug auf die Verbinderlängsrichtung zwischen dem ersten und dem zweiten Verbindungsabschnitt angeordnet und mit dem Basisträger verbunden ist. Der Klebstoffträger kann beispielsweise plattenförmig gestaltet sein. Durch die Klebstoffschicht wird eine zusätzliche, nietfreie Verbindung zwischen Verbinder und Spant erzeugt. Ferner wird eine zusätzliche Stützung des Spants durch den Klebstoffträger erzielt, was die Steifigkeit der Rumpfstruktur weiter verbessert.

Gemäß manchen Ausführungsformen des Verbinders kann vorgesehen sein, dass der zweite Verbindungsabschnitt plattenförmig zur Anlage an einen plattenförmigen Bereich des Spants ausgebildet ist. Demnach kann der zweite Verbindungsabschnitt als Flansch ausgebildet sein, welcher z.B. mit dem Spant verklebt oder durch Verbindungselemente, wie Nieten, Bolzen, Schrauben oder dergleichen, verbunden werden kann. Somit wird ein einfacher Aufbau des Verbinders realisiert, welcher mit einer Vielzahl von Spantquerschnitten flexibel kombinierbar ist. Der zweite Verbindungsabschnitt kann insbesondere eine ebene Kontaktoberfläche aufweisen, welche zur Anlage an einen plattenförmigen Bereich des Spants ausgebildet ist. Die Kontaktoberfläche kann insbesondere in der zweiten Verbinderquerrichtung oder in der ersten Verbinderquerrichtung orientiert sein.

Gemäß manchen Ausführungsformen des Verbinders kann vorgesehen sein, dass der plattenförmige zweite Verbindungsabschnitt in Bezug auf die Verbinderlängsrichtung in einem zweiten Endbereich des Basisträgers angeordnet ist. Damit wird die Abstützung des Spants gegen Verkippen weiter verbessert.

Gemäß manchen Ausführungsformen des Verbinders kann vorgesehen sein, dass der erste Verbindungsabschnitt einen sich in der ersten Verbinderquerrichtung erstreckenden Quersteg aufweist, welcher mit einem ersten Ende mit dem Basisträger verbunden ist, wobei die Kopplungsstruktur einen sich von einem zweiten Ende des Querstegs aus entlang eines ersten Endbereichs des Basisträgers, also entlang der Verbinderlängsrichtung erstreckenden Längssteg aufweist, welcher an einem abgewandt zu dem Quersteg gelegenen Ende auf einer dem

Basisträger zugewandten Seite einen U-förmigen Umbug aufweist. Der U-förmige Umbug bildet somit einen Schlitz, welcher eine dem Quersteg zugewandte Öffnung aufweist. Der Quersteg, der Längssteg und der erste Endbereich des Basisträgers definieren einen Klemmraum. Somit kann eine besonders zuverlässige Halterung und Klemmung des Stringers in dem ersten Verbindungsabschnitt erzielt werden.

Gemäß einer Ausführungsform der Rumpfstruktur kann der Stringer einen S-förmigen Querschnitt aufweisen, wobei die Kopplungsstruktur den Endbereich des S-förmigen Querschnitts des Stringers in Bezug auf eine senkrecht zur Rumpflängsachse stehende Rumpfradialrichtung hintergreift. Beispielsweise kann die Kopplungsstruktur des ersten Verbindungsabschnitts wie beschrieben mit dem Quersteg, dem Längssteg und dem U-förmigen Umbug am Ende des Längsstegs ausgebildet sein.

In einem zum besseren technischen Verständnis gezeigten Beispiel ist eine Rumpfstruktur für ein Luftfahrzeug vorgesehen. Die Rumpfstruktur umfasst einen eine Rumpflängsachse umschließenden, insbesondere ringförmigen, Spant mit einem Spantfuß, einem Spantkopf, welcher in Bezug auf eine senkrecht zur Rumpflängsachse stehende Rumpfradialrichtung entgegengesetzt zu dem Spantfuß gelegen ist, und einer im Bereich des Spantfußes ausgebildeten Stringerausnehmung, einen sich entlang der Rumpflängsachse durch die Stringerausnehmung des Spants hindurch erstreckenden Stringer, welcher z.B. einen Ω-förmigen Querschnitt aufweisen kann, eine sich flächig erstreckende Außenhaut, welche an dem Spantfuß des Spants und dem Stringer befestigt ist, und eine Spantstütze. Die Spantstütze umfasst einen Stützfuß, welcher teilweise zwischen der Außenhaut und dem Spantfuß angeordnet ist, einen Stützträger, welcher sich von dem Stützfuß aus in der Rumpfradialrichtung erstreckt, und einen Verbindungsabschnitt, welcher mit dem Stützträger verbunden ist und in einem von dem Stützträger abgewandten Endbereich eine Kopplungsstruktur aufweist, wobei die Kopplungsstruktur einen Endbereich eines Querschnitts des Spantkopfs umgreift.

Die Verbindungsstruktur der Spantstütze ist somit zur formschlüssigen Verbindung mit dem Spant ausgebildet, was die Montage der Spantstütze erleichtert. Beispielsweise kann der Verbindungsabschnitt einen Quersteg aufweisen, an dessen Ende ein hakenförmiger Umbug oder Fortsatz vorgesehen ist. Die Hakenform der Kopplungsstruktur des Verbindungsabschnitts definiert einen Schlitz, in welchen ein Ende eines Stegs des Spants eingeschoben werden kann. Bei der L-förmigen Struktur kann der Endbereich des Querschnitts Spant zwischen der Kopplungsstruktur und dem zweiten Endbereich des Basisträgers eingeklemmt werden. Somit kann auch der Spant in formschlüssiger Weise mit dem Verbinder verbunden werden, was die Montage weiter erleichtert.

Optional kann die Spantstütze zumindest eine in Bezug auf die Rumpfradialrichtung zwischen dem Stützfuß und dem Verbindungsabschnitt angeordnete und mit dem Stützträger verbundene Anlageplatte aufweist, welche an dem Spant anliegt. Die Anlageplatte weist somit eine dem Spant, insbesondere einem sich in der Rumpfradialrichtung erstreckenden Hauptsteg des Spants zugewandte Oberfläche auf. Diese kann optional mit einer Klebstoffschicht beschichtet sein, welche die Anlageplatte und den Spant miteinander verklebt.

Nach einem vierten Aspekt der Erfindung ist ein Luftfahrzeug mit einer Rumpfstruktur nach dem zweiten Aspekt der Erfindung vorgesehen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "entlang" einer anderen Achse, Richtung oder Struktur verstanden, dass diese, insbesondere die sich in einer jeweiligen Stelle der Strukturen ergebenden Tangenten jeweils in einem Winkel von kleiner 45 Grad, bevorzugt kleiner 30 Grad und insbesondere bevorzugt parallel zueinander verlaufen.

In Bezug auf Richtungsangaben und Achsen, insbesondere auf Richtungsangaben und Achsen, die den Verlauf von physischen Strukturen betreffen, wird hierin unter einem Verlauf einer Achse, einer Richtung oder einer Struktur "quer" zu einer anderen Achse, Richtung oder Struktur verstanden, dass diese, insbesondere die sich in einer jeweiligen Stelle der Strukturen ergebenden Tangenten jeweils in einem Winkel von größer oder gleich 45 Grad, bevorzugt größer oder gleich 60 Grad und insbesondere bevorzugt senkrecht zueinander verlaufen.

Hierin wird unter "einstückig", "einteilig", "integral" oder "in einem Stück" ausgebildeten Komponenten allgemein verstanden, dass diese Komponenten als ein einziges, eine Materialeinheit bildendes Teil vorliegen und insbesondere als ein solches hergestellt sind, wobei die eine von der anderen Komponente nicht ohne Aufhebung des Materialzusammenhalts von der anderen lösbar ist.

Im Folgenden wird die Erfindung unter Bezugnahme auf die Figuren der Zeichnungen erläutert. Von den Figuren zeigen:
- Fig. 1: eine schematische Ansicht eines Luftfahrzeugs gemäß einem Ausführungsbeispiel der vorliegenden Erfindung;
- Fig. 2: eine schematische Schnittansicht einer Rumpfstruktur gemäß einem Ausführungsbeispiel der vorliegenden Erfindung;
- Fig. 3: eine perspektivische Ansicht eines Verbinders gemäß einem Ausführungsbeispiel der Erfindung;
- Fig. 4: eine Seitenansicht des Verbinders aus Fig. 3, welche sich bei Blickrichtung in einer ersten Verbinderquerrichtung ergibt;
- Fig. 5: eine Seitenansicht des Verbinders aus Fig. 3, welche sich bei Blickrichtung in einer zweiten Verbinderquerrichtung ergibt;
- Fig. 6: eine perspektivische Ansicht eines Verbinders gemäß einem weiteren Ausführungsbeispiel der Erfindung;
- Fig. 7: eine Detailansicht eines Kreuzungsbereichs eines Spants und eines Stringers einer Rumpfstruktur gemäß einem Ausführungsbeispiel der Erfindung;
- Fig. 8: eine Schnittansicht der in Fig. 7 gezeigten Rumpfstruktur, die sich bei einem Schnitt entlang der in Fig. 7 eingezeichneten Linie A8-A8 ergibt;
- Fig. 9: einen Schritt eines erfindungsgemäßen Verfahrens zum Verbinden eines Spants und eines Stringers der in den Fign. 7 und 8 gezeigten Rumpfstruktur;
- Fig. 10: einen weiteren Schritt des Verfahrens zum Verbinden eines Spants und eines Stringers der in den Fign. 7 und 8 gezeigten Rumpfstruktur;
- Fig. 11: einen Schritt eines erfindungsgemäßen Verfahrens zum Verbinden eines Spants und eines Stringers der in den Fign. 7 und 8 gezeigten Rumpfstruktur;
- Fig. 12: eine Detailansicht eines Kreuzungsbereichs eines Spants und eines Stringers einer Rumpfstruktur gemäß einem weiteren Ausführungsbeispiel der Erfindung;
- Fig. 13: eine Schnittansicht der in Fig. 12 gezeigten Rumpfstruktur, die sich bei einem Schnitt entlang der in Fig. 12 eingezeichneten Linie A13-A13 ergibt;
- Fig. 14: eine Detailansicht des in Fig. 13 durch den Buchstaben Z gekennzeichneten Bereichs;
- Fig. 15: eine Detailansicht eines Kreuzungsbereichs eines Spants und eines Stringers einer Rumpfstruktur gemäß einem weiteren Ausführungsbeispiel der Erfindung;
- Fig. 16: eine Detailansicht eines Kreuzungsbereichs eines Spants und eines Stringers einer Rumpfstruktur gemäß einem weiteren Ausführungsbeispiel der Erfindung;
- Fig. 17: eine Schnittansicht der in Fig. 16 gezeigten Rumpfstruktur, die sich bei einem Schnitt entlang der in Fig. 16 eingezeichneten Linie A17-A17 ergibt;
- Fig. 18: eine Detailansicht eines Kreuzungsbereichs eines Spants und eines Stringers einer Rumpfstruktur gemäß einem weiteren Ausführungsbeispiel der Erfindung;
- Fig. 19: eine Schnittansicht der in Fig. 18 gezeigten Rumpfstruktur, die sich bei einem Schnitt entlang der in Fig. 18 eingezeichneten Linie A19-A19 ergibt;
- Fig. 20: eine Detailansicht mehrerer Kreuzungsbereiche eines Spants mit Stringer einer Rumpfstruktur gemäß einem weiteren Ausführungsbeispiel;
- Fig. 21: eine Schnittansicht der in Fig. 20 gezeigten Rumpfstruktur, die sich bei einem Schnitt entlang der in Fig. 20 eingezeichneten Linie A21-A21 ergibt; und
- Fig. 22: einen Schritt einer Montage einer Spantstütze an dem Spant der in den Fign. 20 und 21 gezeigten Rumpfstruktur.

In den Figuren bezeichnen dieselben Bezugszeichen gleiche oder funktionsgleiche Komponenten, soweit nichts Gegenteiliges angegeben ist.

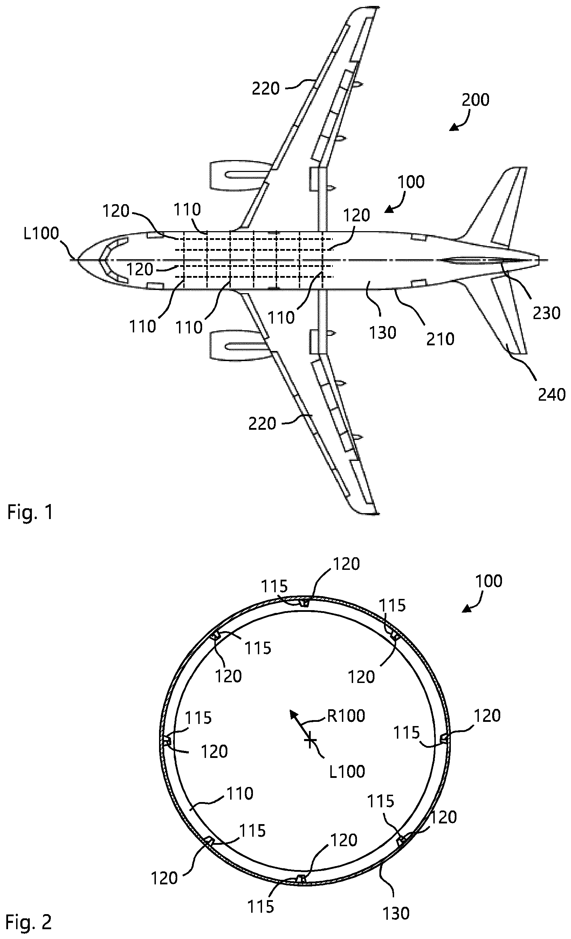

Fig. 1 zeigt schematisch eine Draufsicht auf ein Luftfahrzeug 200. Das Luftfahrzeug 200 weist einen sich entlang einer Rumpflängsachse L100 erstreckenden,

zumindest abschnittsweise im Wesentlichen zylinderförmigen Rumpf 210 auf, von welchem aus sich Flügel 220, ein Seitenleitwerk 230 und ein Höhenleitwerk 240 erstrecken. Der Rumpf 210 weist eine Rumpfstruktur 100 mit mehreren Spanten 110, Stringern 220 und einer Außenhaut 130 auf. Die Spante 110 und Stringer 120 sind in Fig. 1 lediglich symbolisch durch gestrichelte Linien dargestellt. Wie in Fig. 1 erkennbar ist, können mehrere Spante 110 vorgesehen und entlang der Rumpflängsachse L200 beabstandet und parallel zueinander angeordnet sein. Die Stringer 120 erstrecken sich quer zu den Spanten 110 entlang der Rumpflängsachse L100.

Fig. 2 zeigt schematisch eine Schnittansicht der Rumpfstruktur 100. Wie in Fig. 2 schematisch gezeigt ist, bilden die Spante 110 jeweils einen geschlossenen Rahmen, welcher den Rumpfquerschnitt definiert bzw. die Rumpflängsachse L100 definiert und umschließt. Wie in Fig. 2 außerdem erkennbar ist, weist der Spant 110 zumindest eine Stringerausnehmung 115 auf, durch welche hindurch sich jeweils ein Stringer 120 erstreckt. Ein Stringer 120 kreuzt oder durchdringt einen Spant 110 somit in einem jeweiligen Kreuzungsbereich bzw. an einem Kreuzungspunkt. Die Außenhaut 130 kann an den Spanten 110 und/oder den Stringern 120 befestigt sein, z.B. mit diesen vernietet und/oder verklebt sein.

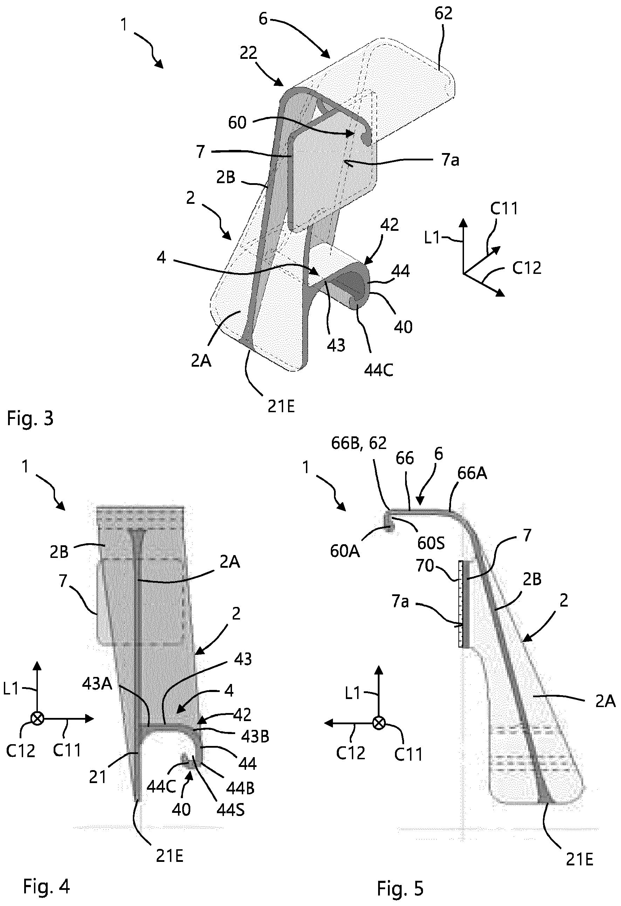

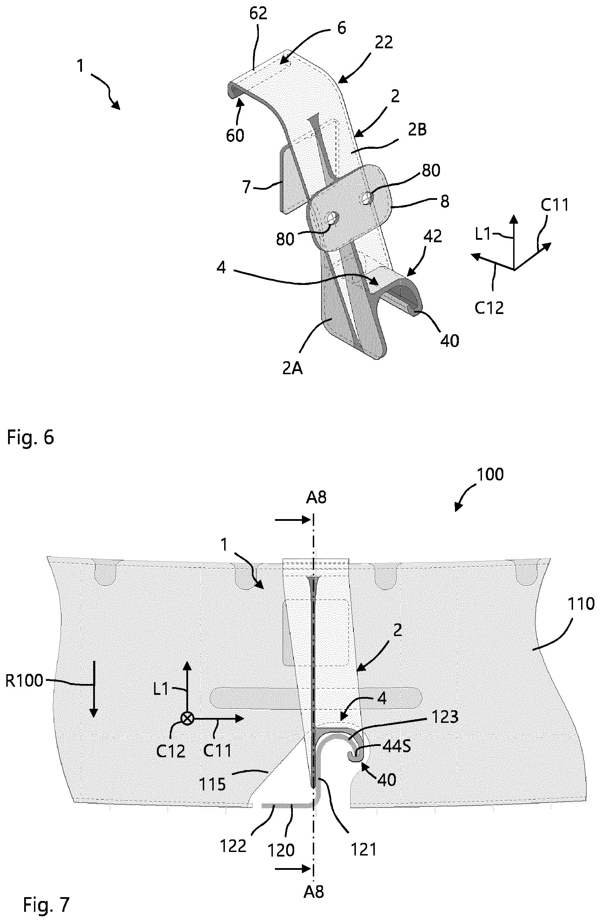

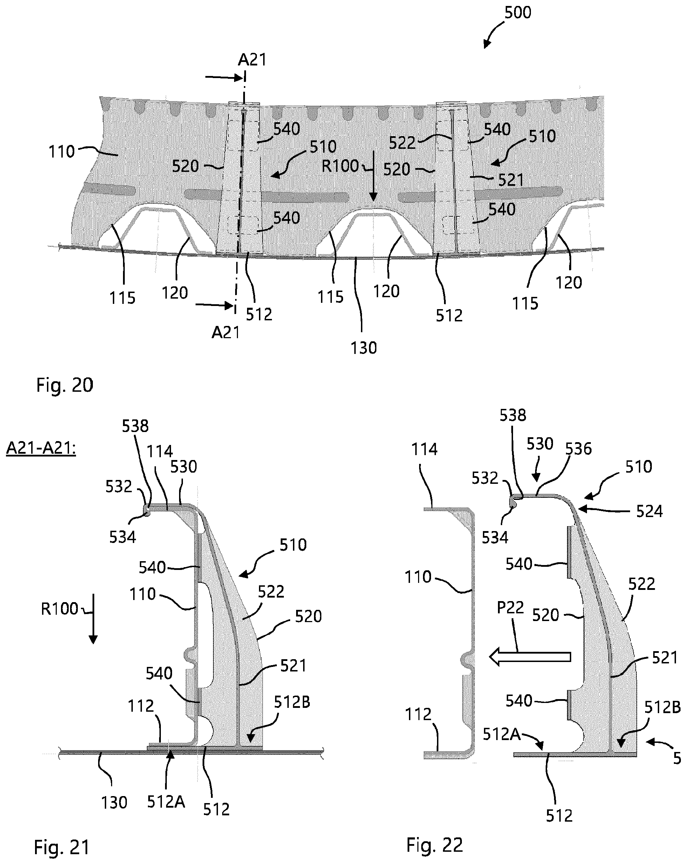

Die Fign. 7 bis 19 zeigen jeweils abgebrochene Ansichten des Kreuzungsbereichs von Stringer 120 und Spant 110 von Rumpfstrukturen 100, bei welchen der Spant 110 und der Stringer 120 mittels eines Verbinders 1 verbunden sind. In den Fign. 3 bis 6 sowie in den Fign. 7 bis 19 sind verschiedene Verbinder 1 dargestellt. Die Fign. 20 bis 22 zeigen eine Rumpfstruktur 500, bei welcher Spant 110 und Stringer 120 nicht durch einen Verbinder 1 miteinander verbunden sind und der Spant 110 durch eine Spantstütze 510 verstärkt bzw. gestützt ist. Im Übrigen kann die in den

Fign. 20 bis 22 gezeigte Rumpfstruktur 500 wie anhand der Fign. 1 und 2 erläutert aufgebaut sein.

In den Fign. 3 bis 5 ist beispielhaft ein Verbinder 1 zum Verbinden des Spants 110 dem Stringer 120 im Kreuzungsbereich dargestellt. Wie in Fign. 3 bis 5 beispielhaft gezeigt ist, kann der Verbinder einen Basisträger 2, einen ersten Verbindungsabschnitt 4 und einen zweiten Verbindungsabschnitt 6 aufweisen. Optional kann außerdem ein Klebstoffträger 7 vorhanden sein.

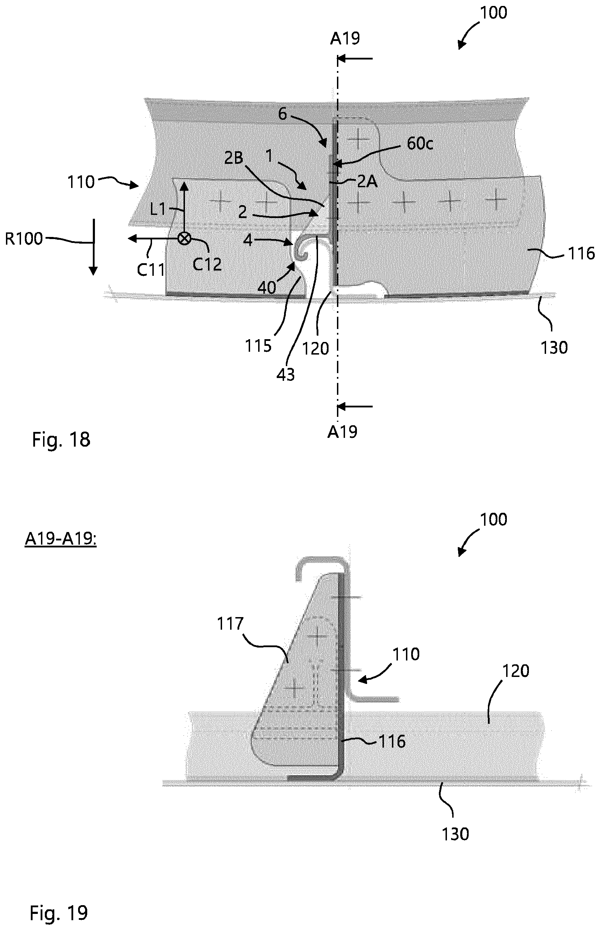

Der Basisträger 2 kann allgemein als ein sich in einer Verbinderlängsrichtung L1 erstreckender Profilträger realisiert sein. Wie in den Fign. 3 bis 5 beispielhaft dargestellt ist, kann der Basisträger 2 beispielsweise einen kreuzförmigen Querschnitt aufweisen. Insbesondere kann der Basisträger 2 einen plattenförmigen ersten Steg 2A und einen den ersten Steg 2A schneidenden und sich quer zu diesem erstreckenden plattenförmigen zweiten Steg 2B aufweisen, wie dies in den Fign. 3 bis 5 beispielhaft gezeigt ist. Wie in den Fign. 3 bis 5 ferner gezeigt ist kann der erste Steg 2A optional einen etwa dreieckförmigen Umfang aufweisen. Der zweite Steg 2B kann sich jedoch auch von dem ersten Steg 2A aus quer zu diesem erstrecken, so dass ein T-förmiger Querschnitt definiert wird, wie dies rein beispielhaft in Fig. 18 gezeigt ist. Allgemein erstreckt sich der Basisträger 2 in der Verbinderlängsrichtung L1 und weist einen ersten Endbereich 21 und einen in Bezug auf die Verbinderlängsrichtung L1 entgegengesetzt zu diesem gelegenen zweiten Endbereich 22 auf.

Wie in den Fign. 3 bis 5 rein beispielhaft gezeigt ist, kann der erste Verbindungsabschnitt 4 beispielsweise einen Quersteg 43 und eine Kopplungsstruktur 40 aufweisen. Wie insbesondere in Fig. 4 erkennbar ist, kann sich der Quersteg 43 in einer quer zu der Verbinderlängsrichtung L1 erstreckenden ersten Verbinderquerrichtung C11 erstrecken. Ein erstes Ende 43A des Querstegs 43 ist mit dem Basisträger 2 verbunden, z.B. mit dem ersten Steg 2A des Basisträgers 2. Ein zweites Ende 43B des Querstegs 43 ist in Bezug auf die erste Verbinderquerrichtung C11 abgewandt von dem Basisträger 2, insbesondere abgewandt von dem ersten Steg 2A des Basisträgers 2 gelegen. Der zweite Steg 2B des Basisträgers 2 kann sich beispielsweise ebenfalls in der ersten Verbinderquerrichtung C11 erstrecken und optional mit dem Quersteg 43 verbunden sein, wie dies in Fig. 4 beispielhaft gezeigt ist. Der Quersteg 43 kann im Bereich des ersten Endbereichs 21 des Basisträgers 2 angeordnet sein, wie dies in den Fign. 3 bis 5 beispielhaft gezeigt ist. Der erste Endbereich 21 des Basisträgers 2 kann sich somit zwischen erstem Ende 21E des Basisträgers 2 und dem Quersteg 43 erstrecken. Der Quersteg 43 kann insbesondere einstückig mit dem Basisträger 2 ausgebildet sein, z.B. können Basisträger 2 und Quersteg 43 in einem additiven Herstellungsverfahren, wie z.B. einem 3-D-Druckverfahren, oder einem Gussverfahren hergestellt werden.

Wie in den Fign. 3 bis 5 rein beispielhaft gezeigt ist, kann die Kopplungsstruktur 40 einen Längssteg 44 und alternativ oder zusätzlich zu dem Längssteg 44 einen hakenförmigen oder U-förmigen Umbug 44C aufweisen. Die Kopplungsstruktur 40 ist allgemein dazu ausgebildet, einen Endbereich eines Querschnitts des Stringers 120 zu umgreifen, so dass der Stringer 120 formschlüssig an dem ersten Verbindungsabschnitt 4 gehaltert werden kann.

Wie insbesondere in Fig. 4 erkennbar ist, kann der Längssteg 44 sich von dem zweiten Ende 43B des Querstegs 43 aus entlang des ersten Endbereichs 21 des Basisträgers 2 erstrecken, insbesondere in Richtung des ersten Endes 21E des Basisträgers 2. Damit verläuft der Längssteg 44 entlang der Verbinderlängsrichtung L1. Insbesondere kann sich der Quersteg 43 entlang des ersten Stegs 2A des Basisträgers 2 erstrecken. Zwischen dem Längssteg 44 und dem Basisträger 2, insbesondere dem ersten Steg 2A des Basisträgers 2 wird somit ein Aufnahme- oder Klemmraum gebildet, in welchen der Stringer 120 aufgenommen werden kann.

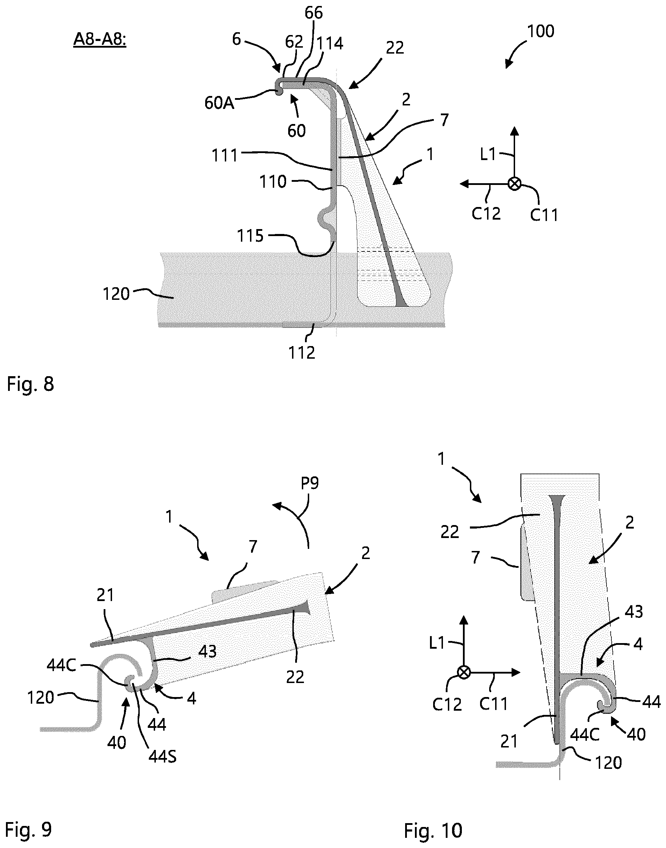

Der optionale Umbug 44C kann an einem in Bezug auf die Verbinderlängsrichtung L1 abgewandt zu dem Quersteg 43 gelegenen Ende 44B angeordnet sein. Alternativ hierzu kann der Längssteg 44 auch weggelassen werden und der Umbug 44C kann direkt an dem zweiten Ende 43B des Querstegs 43 ausgebildet sein. Allgemein ist der Umbug 44C zu dem Basisträger 2 hin umgebogen bzw. zu einer dem Basisträger 2 zugewandten Seite hin. Der Umbug 44C definiert somit eine hakenförmige Struktur, welche zum Umgreifen eines Endbereichs des Querschnitts des Stringers 120 ausgebildet ist, z.B. kann ein Ende eines Stegs des Stringers in einen durch den Umbug 44C definieren Aufnahmeschlitz 44S eingeschoben werden, wie dies insbesondere anhand der Fign. 9 und 10 noch genauer erläutert wird. Allgemein kann vorgesehen sein, dass die Kopplungsstruktur 40 dazu ausgebildet ist, einen Endbereich des Querschnitts des Stringers 120 in Bezug auf die erste Verbinderquerrichtung C11 und/oder in Bezug auf die Verbinderlängsrichtung L1 zu umgreifen.

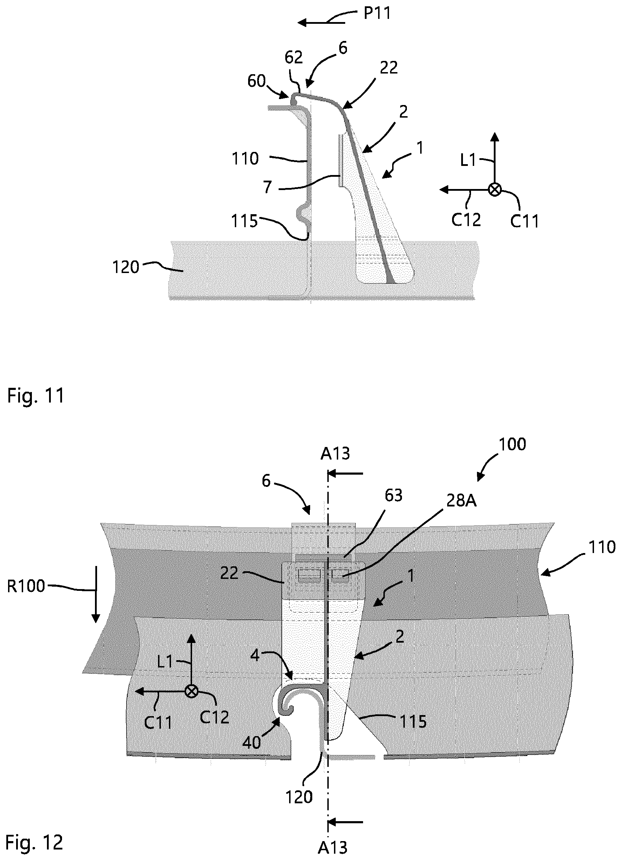

Der zweite Verbindungsabschnitt 6 dient zur Verbindung mit dem Spant 110. Wie in den Fign. 3 bis 5 rein beispielhaft dargestellt ist, kann der zweite Verbindungsabschnitt 6 beispielsweise im zweiten Endbereich 22 des Basisträgers 2 angeordnet sein. Der zweite Verbindungsabschnitt 6 kann beispielsweise einstückig mit dem Basisträger 2 ausgebildet sein, wie dies in den Fign. 3 bis 5 beispielhaft gezeigt ist. Alternativ hierzu kann der zweite Verbindungsabschnitt 6 auch als ein von dem Basisträger 2 separates und an diesem verriegeltes Teil ausgeführt sein, wie dies nachfolgend anhand der Fign. 12 bis 15 noch genauer erläutert wird. Allgemein ist der Verbindungsabschnitt 6 mit dem Basisträger 2 verbunden.

Der in den Fign. 3 bis 5 beispielhaft gezeigte Verbinder 1 weist einen zweiten Verbindungsabschnitt 6 mit einer Kopplungsstruktur 60 auf, welche zum Umgreifen eines Endbereichs eines Querschnitts des Spants 110 ausgebildet ist. Wie insbesondere in Fig. 5 erkennbar ist, kann der Verbindungsabschnitt 6 beispielsweise einen Quersteg 66 aufweisen, welcher mit einem ersten Ende 66A mit dem zweiten Endbereich 22 des Basisträgers 2 verbunden ist, insbesondere mit dem zweiten Steg 2B des Basisträgers 2. Der Quersteg 66 erstreckt sich quer zu dem Basisträger 2, insbesondere zu dem zweiten Steg 2B des Basisträgers 2. Wie in den Fign. 3 bis 5 beispielhaft dargestellt ist, kann sich der Quersteg 66 insbesondere in einer zweiten Verbinderquerrichtung C12 erstrecken, welche quer zur Verbinderlängsrichtung L1 und quer zur ersten Verbinderquerrichtung C11 verläuft. Allgemein kann der zweite Verbindungsabschnitt 6 damit in einer zweiten Verbinderquerrichtung C12 orientiert sein.

Die Kopplungsstruktur 60 des zweiten Verbindungsabschnitts 6 kann eine hakenförmige Struktur 60A aufweisen, wie dies insbesondere in Fig. 5 beispielhaft gezeigt ist. Die hakenförmige Struktur 60A kann an einem zweiten Ende 66B des Querstegs 66, welches entgegengesetzt zu dem ersten Ende 66A und damit von dem Basisträger 2 abgewandt gelegen ist, angeordnet sein, wie dies in Fig. 5 beispielhaft gezeigt ist. Allgemein kann die Kopplungsstruktur 60 des zweiten Verbindungsabschnitts 6 somit in einem von dem Basisträger 2 abgewandten Endbereich 62 des zweiten Verbindungsabschnitts 6 gelegen sein. Die in Fig. 5 beispielhaft dargestellte hakenförmig ausgebildete Kopplungsstruktur 60 kann einen Schlitz 60S definieren, welcher zu dem Basisträger 2 hin offen ist, so dass ein Endbereich eines Querschnitts des Spants 110 darin aufgenommen werden kann, z.B. ein Ende eines Stegs des Spants 110, wie dies in Fig. 8 beispielhaft gezeigt ist.

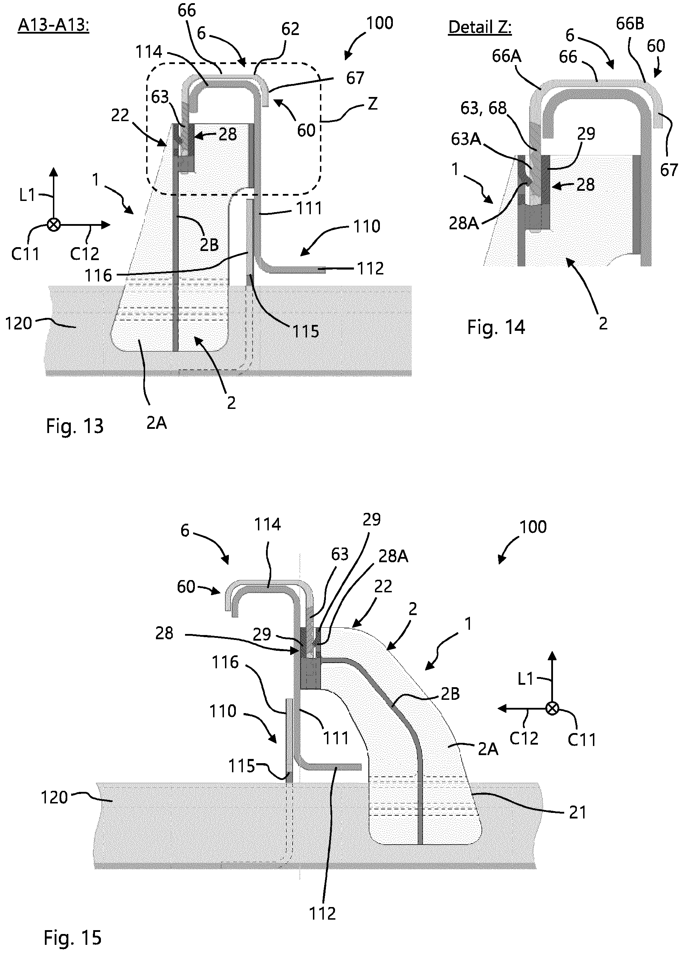

Alternativ oder zusätzlich zu der hakenförmigen Struktur 60A kann die Kopplungsstruktur 60 des zweiten Verbindungsabschnitts 6 auch einen sich von dem zweiten Ende 66B des Querstegs 66 aus und entlang der Verbinderlängsrichtung L1 in Richtung des ersten Endbereichs 21 des Basisträgers 2 erstreckenden Längssteg 67 aufweisen, wie dies in den Fign. 13 und 14 beispielhaft gezeigt ist. Optional kann an einem abgewandt von dem Quersteg 66 gelegenen Ende des Längsstegs 67 zusätzlich die hakenförmige Struktur 60A ausgebildet sein.

Wie in den Fign. 3 bis 5 weiterhin gezeigt ist, kann der optionale Klebstoffträger 7 allgemein als eine Platte mit einer vorzugsweise ebenen Oberfläche 7a ausgebildet sein. Die Oberfläche 7a des Klebstoffträgers 7 kann mit einem Klebstoff 70 beschichtet sein, wie dies in Fig. 5 schematisch dargestellt ist. Wie insbesondere in Fig. 5 erkennbar ist, kann der Klebstoffträger 7 in Bezug auf die Verbinderlängsrichtung L1 beispielsweise zwischen dem ersten und dem zweiten Verbindungsabschnitt 4, 6 angeordnet sein. Der Klebstoffträger 7 ist mit dem Basisträger 2 verbunden und kann beispielsweise einstückig mit diesem ausgebildet sein. Wie in Fig. 5 erkennbar, kann die mit Klebstoff 70 beschichtete Oberfläche 7a beispielsweise in der zweiten Verbinderquerrichtung C12 orientiert sein. Allgemein kann die Oberfläche 7a in derselben Richtung orientiert sein, wie der zweite Verbindungsabschnitt 6.

In Fig. 6 ist rein beispielhaft ein weiterer Verbinder 1 dargestellt. Dieser unterscheidet sich von dem in den Fing. 3 bis 5 dargestellten Verbinder 1 lediglich dadurch, dass dieser zusätzlich eine optionale Befestigungsstruktur 8 aufweist. Die optionale Befestigungsstruktur 8 dient zur Anbringung von Zusatzkomponenten, wie z.B. Kabelhalterungen oder dergleichen. Wie in Fig. 6 beispielhaft gezeigt ist, kann die Befestigungsstruktur 8 als plattenförmiges Teil realisiert sein, welches eine oder mehrere Ausnehmungen 80 aufweist, z.B. in Form von Durchgangsöffnungen. Die Befestigungsstruktur 8 ist mit dem Basisträger 2 verbunden und kann beispielsweise einstückig mit diesem ausgebildet sein. Wie in Fig. 6 beispielhaft dargestellt, kann die Befestigungsstruktur 8 insbesondere zwischen dem ersten und dem zweiten Endbereich 21, 22 des Basisträgers 2 angeordnet sein, z.B. an dem ersten Steg 2A und sich parallel zu dem zweiten Steg 2B erstrecken. Insbesondere kann die Befestigungsstruktur 8 in Bezug auf die zweite Verbinderquerrichtung C12 entgegengesetzt zu dem zweiten Verbindungsabschnitt 6 angeordnet sein, wie dies in Fig. 6 beispielhaft gezeigt ist.

Fig. 7 zeigt beispielhaft eine Detailansicht der Rumpfstruktur 100 im Kreuzungsbereich von Spant 110 und Stringer 120 in einer Blickrichtung entlang der Rumpflängsachse L100, wobei Spant 110 und Stringer 120 mit einem Verbinder 1, wie er anhand der Fign. 3 bis 6 erläutert wurde, verbunden sind. Fig. 8 zeigt eine Schnittansicht der in Fig. 7 gezeigten Rumpfstruktur 100, die sich bei einem Schnitt entlang der in Fig. 7 eingezeichneten Linie A8-A8 ergibt.

Wie in Fig. 7 beispielhaft dargestellt ist, kann der Stringer 120 beispielsweise einen als S- oder Z-förmig zu beschreibenden Querschnitt aufweisen. Der Stringer 120 kann beispielsweise einen sich entlang der Rumpfradialrichtung R100 erstreckenden Zentralsteg 121, einen Fußsteg 122, welcher in Bezug auf die Rumpfradialrichtung R100 an einem ersten, äußeren Ende des Zentralstegs 121 angeordnet ist und sich zu einer ersten Seite des Zentralstegs 121 quer zu diesem erstreckt, und einen Kopfsteg 123 aufweisen, welcher sich welcher in Bezug auf die Rumpfradialrichtung R100 an einem zweiten, inneren Ende des Zentralstegs 121 angeordnet ist und sich zu einer zweiten Seite des Zentralstegs 121 erstreckt, wie dies in Fig. 7 beispielhaft gezeigt ist. Der Kopfsteg 123 kann beispielsweise gekrümmt verlaufen, so dass dessen vom Zentralsteg 121 abgewandtes Ende in Richtung des ersten Endes des Zentralstegs 121 weist, wie in Fig. 7 beispielhaft gezeigt.

Der Spant 110 kann beispielsweise einen C-förmigen Querschnitt aufweisen, wie dies in Fig. 8 beispielhaft gezeigt ist. Der Spant 110 kann beispielsweise einen plattenförmigen Zentralsteg 111, einen an einem in Bezug auf die Rumpfradialrichtung R100 ersten, äußeren Ende des Zentralstegs 111 angeordneten stegförmigen Spantfuß 112 und einen an einem in Bezug auf die Rumpfradialrichtung R100 zweiten, inneren Ende des Zentralstegs 111 angeordneten stegförmigen Spantkopf 114 aufweisen, wobei sich der Spantkopf 114 und der Spantfuß 112 jeweils parallel zueinander auf einer ersten Seite des Zentralstegs 111 erstrecken.

Wie in Fig. 7 beispielhaft gezeigt, ist umgreift der erste Verbindungsabschnitt 4 des Verbinders 1 mit der Kopplungsstruktur 40 einen Endbereich eines Querschnitts des Stringers 120. Hierbei sind der Kopfsteg 123 und ein Teil des Zentralstegs 121 des Stringers 120 zwischen dem Längssteg 44 und dem ersten Steg 2A des Basisträgers 2 eingeklemmt. Ferner ist das vom Zentralsteg 121 abgewandte Ende des Kopfstegs 123 in dem durch die hakenförmige Struktur 44C definierten Schlitz 44S aufgenommen. Somit kann allgemein vorgesehen sein, dass die Kopplungsstruktur 40 den Endbereich des S-förmigen Querschnitts des Stringers 120 in Bezug auf die Rumpfradialrichtung R100 umgreift.

Wie in Fig. 8 beispielhaft dargestellt ist, ist der zweite Verbindungsabschnitt 6 des Verbinders 1 mit dem Spant 110 verbunden. Beispielsweise kann der Quersteg 66 des zweiten Verbindungsabschnitts 6 entlang der Rumpflängsachse L100 ausgerichtet sein und in Bezug auf die Rumpfradialrichtung R100 innerhalb des Spantkopfes 114 über diesen hinweg erstrecken, wie in Fig. 8 beispielhaft gezeigt. Die Kopplungsstruktur 60 des zweiten Verbindungsabschnitts 6, welche in Fig. 8 rein beispielhaft als hakenförmige Struktur 60A realisiert ist, umgreift ein von dem Zentralsteg 111 abgewandtes Ende des Spantkopfes 114 bzw. ist dieses in dem durch die hakenförmige Struktur 60A und den Quersteg 66 definierten Schlitz aufgenommen.

Wie in Fig. 8 ferner erkennbar ist, liegt der optionale Klebstoffträger 7 an einer zweiten Seite des Zentralstegs 111 des Spants 110 an bzw. ist durch die Klebstoffschicht 70 (in Fig. 8 nicht dargestellt) mit dem Spant 110 verklebt.

Wie in den Fign. 7 und 8 gezeigt ist, können durch den Verbinder 1 der Spant 110 und der Stringer 120 an deren Kreuzungspunkt aneinander gekoppelt werden, indem der Verbinder mit dem Stringer 120 und optional auch mit dem Spant 110 formschlüssig verbunden wird. Somit ist eine besonders schnelle und einfache Montage möglich. Die Fign. 9 bis 11 zeigen schematisch den Ablauf eines effizienten Verfahrens zum Verbinden eines Spants 110 und eines Stringers 120.

In einem ersten Schritt kann beispielsweise ein Einführen des Endbereichs des Querschnitts des Stringers 120 in die Kopplungsstruktur 40 des ersten Verbindungsabschnitts 4 des Verbinders 1 erfolgen. Wie in Fig. 9 beispielhaft gezeigt ist, kann das Einführen des Endbereichs des Querschnitts des Stringers 120 in die Kopplungsstruktur 40 des ersten Verbindungsabschnitts 4 beispielsweise erfolgen, indem der Endbereich des Querschnitts des Stringers 120, z.B. das Ende des Stringerkopfes 121 zwischen die Kopplungsstruktur 40 und den ersten Endbereich 21 des Basisträgers 2 eingeführt wird. Anschließend kann ein

Schwenken des Verbinders 1 bzw. des Basisträgers 2 über den Stringer 120 hinweg erfolgen. In Fig. 9 ist dies symbolisch durch den Pfeil P9 angedeutet, wobei der zweite Endbereich 22 des Basisträgers 2 von der zweiten Seite des Stringers 120 in Richtung der ersten Seite des Stringers 120 geschwenkt wird, bis dieser die in Fig. 10 gezeigte Position erreicht, in der die Kopplungsstruktur 40 den Endbereich des Querschnitts des Stringers 120 vollständig umgreift.

Weiterhin erfolgt ein Positionieren des zweiten Verbindungsabschnitts 6 des Verbinders 1 an dem Spant 110, z.B. durch Verschieben des Verbinders 1 entlang des Stringers 120 in Richtung des Spants 110 oder durch Verschieben des Stringers 120 entlang der Rumpflängsachse L100 derart, dass der Verbinder 1 dem Spant 110 angenähert wird.

In einem weiteren Schritt erfolgt ein Verbinden des zweiten Verbindungsabschnitts 6 des Verbinders 1 mit dem Spant 110. Wenn der zweite Verbindungsabschnitt 6 eine Hakenstruktur 60A als Kopplungsstruktur 60 aufweist, wie dies in den Fign 9 bis 11 beispielhaft gezeigt ist, kann zum Verbinden des zweiten Verbindungsabschnitts 6 mit dem Spant 110 der Quersteg 66 des zweiten Verbindungsabschnitts 6 derart elastisch verformt werden, dass das zweite Ende 66B des Querstegs 66 in der Verbinderlängsrichtung L1 angehoben wird, wie dies in Fig. 11 beispielhaft gezeigt ist. Dadurch kann die Hakenstruktur 66A entlang der Rumpflängsachse L100 über den Spantkopf 114 hinweg geschoben werden, wie dies in Fig. 11 durch den Pfeil P11 symbolisch angezeigt ist, bis das vom Zentralsteg 111 abgewandte Ende des Spantkopfes 114 in die Hakenstruktur 66A einrastet (Fig. 8). Bei anderen Gestaltungen des zweiten Verbindungsabschnitts 6 kann das Verbinden des zweiten Verbindungsabschnitts 6 des Verbinders 1 mit dem Spant 110 ein Vernieten, Verschrauben, Verkleben oder Verschweißen des zweiten Verbindungsabschnitts 6 mit dem Spant 110 umfassen.

Fig. 12 zeigt beispielhaft eine Detailansicht einer weiteren Rumpfstruktur 100 im Kreuzungsbereich von Spant 110 und Stringer 120 in einer Blickrichtung entlang der Rumpflängsachse L100, wobei Spant 110 und Stringer 120 mit einem Verbinder 1 verbunden sind. Fig. 13 zeigt eine Schnittansicht der in Fig. 12 gezeigten Rumpfstruktur 100, die sich bei einem Schnitt entlang der in Fig. 12 eingezeichneten Linie A13-A13 ergibt. Fig. 14 zeigt eine Detailansicht des in Fig. 13 mit dem Buchstaben Z gekennzeichneten Bereichs

Wie insbesondere in den Fign. 13 und 14 erkennbar ist, unterscheidet sich der Verbinder 1 von dem in den Fign. 3 bis 6 gezeigten Verbinder lediglich durch die Gestaltung des zweiten Verbindungsabschnitts 6. Dieser ist in den Fign. 12 bis 14 nicht einstückig mit dem Basisträger 2 ausgebildet, sondern entlang der Verbinderlängsrichtung L1 verschiebbar an dem Basisträger 2 geführt. Der zweite Verbindungsabschnitt 6 kann insbesondere einen Führungsbereich 63 aufweisen, welcher beispielsweise durch einen im Wesentlichen plattenförmigen Führungssteg 68 ausgebildet sein kann, wie dies in den Fign. 13 und 14 beispielhaft gezeigt ist. An dem Führungsbereich 63 kann optional eine Verriegelungs- oder Raststruktur 63A ausgebildet sein, z.B. in Form von Zähnen wie dies in den Fign. 13 und 14 schematisch gezeigt ist. Wie insbesondere in Fig. 14 ferner dargestellt ist, kann der Führungsbereich 63 sich von dem ersten Ende 66A des Querstegs 66 des zweiten Verbindungsabschnitts 6 und quer zu dem Quersteg 66 erstrecken. In den Fign. 13 und 14 ist beispielhaft dargestellt, dass die Kopplungsstruktur 60 des zweiten Verbindungsabschnitts 6 einen sich von dem zweiten Ende 66B des Querstegs 66 aus und entlang der Verbinderlängsrichtung L1 in Richtung des ersten Endbereichs 21 des Basisträgers 2 erstreckenden Längssteg 67 aufweist. Alternativ oder zusätzlich könnte auch eine hakenförmige Struktur 60A vorgesehen sein, wie in den Fign. 3 bis 6 gezeigt.

Um den Verbindungsabschnitt 6 entlang der Verbinderlängsrichtung L1 zu führen, kann der Basisträger 2 eine Führung 28 aufweisen. Wie in den Fign. 13 und 14 beispielhaft dargestellt ist, kann die Führung 28 beispielsweise durch einen ebenen, im zweiten Endbereich 22 des Basisträgers 2 gelegenen Endabschnitt des zweiten Stegs 2B des Basisträgers 2 und einen Führungssteg 29 ausgebildet sein, der sich parallel zu dem Endabschnitt des zweiten Stegs 2B des Basisträgers 2 erstreckt. Somit bilden der Endabschnitt des zweiten Stegs 2B des Basisträgers 2 und der Führungssteg 29 einen Führungskanal aus, in welchem der Führungsbereich 63 des zweiten Verbindungsabschnitts 6 aufgenommen und geführt ist. Beispielsweise kann der den Führungsbereich 63 bildende Steg 68 zwischen dem Endabschnitt des zweiten Stegs 2B des Basisträgers 2 und der Führungssteg 29 angeordnet sein, wie dies in den Fign. 13 und 14 beispielhaft gezeigt ist.

Die Führung 28 des Basisträgers 2 kann optional eine erste Verriegelungsstruktur 28A aufweisen. Wie in den Fign. 13 und 14 beispielhaft gezeigt ist, kann die erste Verriegelungsstruktur 28A beispielsweise durch einen in den Führungskanal hineinragenden bzw. von dem Endabschnitt des zweiten Stegs 2B des Basisträgers 2 vorstehenden elastischen Steg oder Ansatz ausgebildet sein. Die erste Verriegelungsstruktur 28A greift in die Verriegelungsstruktur 63A des Führungsbereichs 63 des zweiten Verbindungsabschnitts 6 ein und verriegelt diesen somit in einer Position in Bezug auf die Verbinderlängsrichtung L1. Die die Zähne der Verriegelungsstruktur 63A des Führungsbereichs 63 des zweiten Verbindungsabschnitts 6 können insbesondere derart geformt sein und die erste Verriegelungsstruktur 28A des Basisträgers 2 kann insbesondere derart elastisch verformbar sein, dass diese eine Verschiebung des Führungsbereichs 63 des zweiten Verbindungsabschnitts 6 in einer Richtung, z.B. in Richtung des ersten Endbereichs 21 des Basisträgers 2, zulässt und in einer entgegengesetzten Richtung sperrt.

Zur Verbindung des Verbinders 1 mit dem Spant 110 kann der zweite Verbindungsabschnitt 6 beispielsweise nachträglich, wenn der Basisträger 2 bereits am Stringer 120 angebracht und relativ zum Spant 110 positioniert ist, mit dem Basisträger 2 verriegelt werden, z.B. indem der Führungsbereich 63 in Führung 28 des Basisträgers 2 eingesetzt wird und der zweite Verbindungsabschnitt 6 durch die Führung 28 geführt in Richtung des ersten Endbereichs 21 des Basisträgers 2 bewegt wird, so dass der Spant 110 zwischen den Längssteg 67 und den Führungsbereich 63 eingeführt wird.

Ein weiterer Unterschied zwischen der in den Fign. 12 bis 14 gezeigten Rumpfstruktur 100 zu der in den Fign. 7 und 8 gezeigten Rumpfstruktur 100 liegt in der Gestaltung des Spants 110. Wie in den Fign. 12 und 13 gezeigt ist, kann der Spant 110 mit einem im Querschnitt L-förmigen Randstück 116 verbunden sein. Der Spant 110 kann beispielsweise einen S- oder Z-förmigen Querschnitt aufweisen, bei welchem der Spantfuß 112 und der Spantkopf 114 zu entgegengesetzten Seiten von dem Zentralsteg 111 des Spants 110 vorstehen. Wie in Fig. 13 beispielhaft gezeigt ist, kann der Spantkopf 114 im Wesentlichen L-förmig bzw. parallel zum Zentralsteg 111 abgebogen sein. Der Randstück 116 und der Spantkopf 114 können insbesondere auf derselben Seite des Zentralstegs 111 angeordnet sein, wobei das Randstück 116 zur Ausbildung des L-förmigen Querschnitts zu derselben Seite hin abgebogen ist, auf welcher der Spantkopf 114 von dem Zentralsteg 111 vorsteht.

Wie in den Fign. 12 und 13 beispielhaft dargestellt ist, kann der Verbinder 1 auf derselben Seite des Spants 110 angeordnet sein, zu welcher der Spantkopf 114 von dem Zentralsteg 111 vorsteht. Ein Vorteil dieser Gestaltung liegt in der besonders kompakten Anordnung Verbinders 1. Alternativ hierzu kann der Verbinder 1 auch auf der entgegengesetzten Seite des Spants 110 angeordnet sein, zu welcher der Spantkopf 114 von dem Zentralsteg 111 vorsteht, wie dies in Fig. 15 beispielhaft dargestellt ist. In diesem Fall kann der Basisträger 2 gekrümmt oder gekröpft verlaufen, um den Spantfuß 112 zu überbrücken. Ein Vorteil dieser Anordnung liegt darin, dass der erste Verbindungsabschnitt 4, der mit dem Stringer 120 verbunden ist, in einem gewissen Abstand zu dem Spant 110 angeordnet ist. Dadurch wird die Stützwirkung des Verbinders 1 gegen ein Kippen des Spants 110 weiter verbessert. Wie in Fig. 15 weiterhin gezeigt ist, kann die Führung 28 des Basisträgers 2 auch zwei parallele Führungsstege 29 aufweisen, welche den Führungskanal definieren. Dies gilt unabhängig von der Gestaltung des Spants 110 oder des Basisträgers 2.

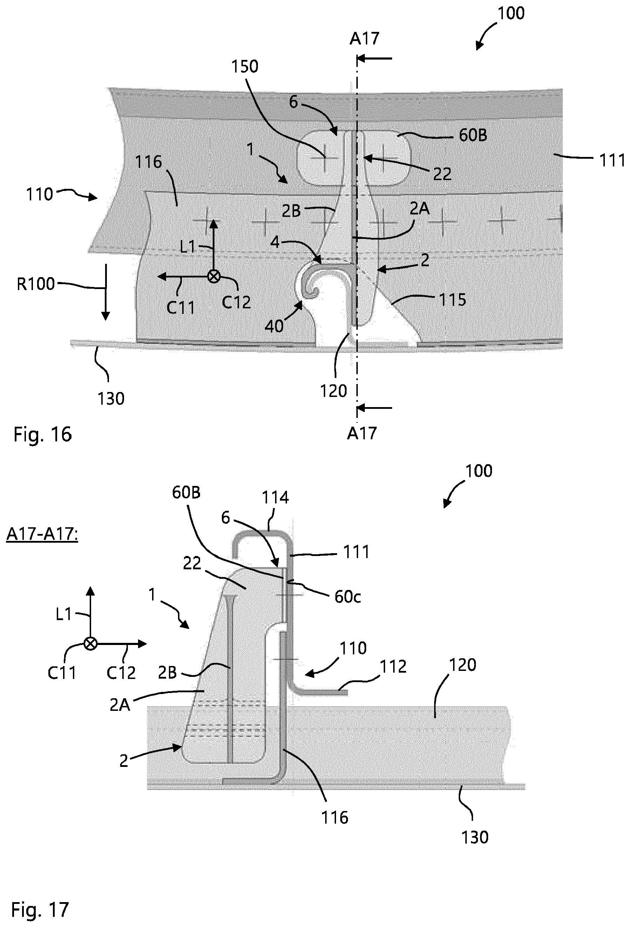

Fig. 16 zeigt beispielhaft eine Detailansicht einer weiteren Rumpfstruktur 100 im Kreuzungsbereich von Spant 110 und Stringer 120 in einer Blickrichtung entlang der Rumpflängsachse L100, wobei Spant 110 und Stringer 120 mit einem Verbinder 1 verbunden sind. Fig. 17 zeigt eine Schnittansicht der in Fig. 16 gezeigten Rumpfstruktur 100, die sich bei einem Schnitt entlang der in Fig. 16 eingezeichneten Linie A17-A17 ergibt. In den Fign. 16 und 17 ist der Spant 110 wie in den Fign. 12 bis 14 S- oder Z-förmig und mit einem Randstück 116 realisiert.

Die in den Fign. 16 und 17 gezeigte Rumpfstruktur 100 unterscheidet sich von der in den Fign. 12 bis 14 gezeigten Rumpfstruktur 100 lediglich durch die Gestaltung des Verbinders 1 und der Befestigung des zweiten Verbindungsabschnitts 6 des Verbinders 1 an dem Spant. Die im Folgenden beschriebene Gestaltung des Verbinders 1 kann unabhängig von der Gestaltung des Spants 110 realisiert werden und ist nicht auf die Kombination mit einem Z-förmigen Spant 110 mit einem Randstück 116 beschränkt.

Wie in den Fign. 16 und 17 beispielhaft dargestellt ist, kann der zweite Verbindungsabschnitt 6 des Verbinders 1 plattenförmig realisiert sein, z.B. in Form eines Flanschs 60B. Insbesondere kann der Verbindungsabschnitt 6 eine Anlagefläche 60c aufweisen, welche zur Anlage an den Spant 110 ausgebildet ist. Die Anlagefläche 60c kann insbesondere eben ausgebildet sein. Der Flansch 60B kann sich beispielsweise entlang der ersten Verbinderquerrichtung C11 erstrecken. Das heißt, die Anlagefläche 60c, welche an dem Flansch 60B vorgesehen sein kann, ist in der zweiten Verbinderquerrichtung C12 orientiert bzw. ein Normalenvektor auf die Anlagefläche 60c weist in die zweite Verbinderquerrichtung C12. Der zweite Verbindungsabschnitt 6 kann somit allgemein in einer zweiten Verbinderquerrichtung C12 orientiert sein. Wie in den Fign. 16 und 17 weiterhin beispielhaft gezeigt ist, kann der Flansch 60B in Bezug auf die Verbinderlängsrichtung L1 in einem zweiten Endbereich 22 des Basisträgers 2 angeordnet sein. Beispielsweise kann der Flansch 60B an einem Ende des ersten Stegs 2A des Basisträgers 2 angeordnet sein und sich quer zu diesem erstrecken, wie dies in den Fign. 16 und 17 beispielhaft gezeigt ist.

Wie in den Fign. 16 und 17 beispielhaft dargestellt, kann der Flansch 60B mit dem Zentralsteg 111 des Spants 110verbunden sein. Insbesondere kann die Anlagefläche 60c an dem Zentralsteg 111 des Spants 110 anliegen. In Fig. 16 ist rein beispielhaft gezeigt, dass der Flansch 60B mittels Nieten an dem Zentralsteg 111 des Spants 110 befestigt ist, wobei die Nieten lediglich symbolisch durch Kreuze 150 dargestellt sind. Grundsätzlich sind auch andere Möglichkeiten der Verbindung denkbar, z.B. ein Verkleben, ein Verschweißen, ein Verschrauben oder dergleichen.

Fig. 18 zeigt beispielhaft eine Detailansicht einer weiteren Rumpfstruktur 100 im Kreuzungsbereich von Spant 110 und Stringer 120 in einer Blickrichtung entlang der Rumpflängsachse L100, wobei Spant 110 und Stringer 120 mit einem Verbinder 1 verbunden sind. Fig. 19 zeigt eine Schnittansicht der in Fig. 18 gezeigten Rumpfstruktur 100, die sich bei einem Schnitt entlang der in Fig. 18 eingezeichneten Linie A19-A19 ergibt. In den Fign. 18 und 19 ist der Spant 110 wie in den Fign. 12 bis 17 S- oder Z-förmig und mit einem Randstück 116 realisiert.

Die in den Fign. 18 und 19 gezeigte Rumpfstruktur 100 unterscheidet sich von der in den Fign. 16 und 17 gezeigten Rumpfstruktur 100 lediglich durch die Gestaltung des Verbinders 1, insbesondere durch die Orientierung des plattenförmigen zweiten Verbindungsabschnitts 6, und durch die Gestaltung des Randstücks 116 im Bereich der Stringerausnehmung 115.

Wie in den Fign. 18 und 19 beispielhaft gezeigt ist, kann das Randstück 116 eine die Stringerausnehmung 115 definierende Unterbrechung aufweisen. Benachbart zu dieser Unterbrechung kann das Randstück 116 eine sich entlang der Rumpflängsachse L100 bzw. quer zum Zentralsteg 111 des Spants 110 und entlang des Stringers 120 erstreckende Verbindungslasche 117 aufweisen. Wie in Fig. 19 beispielhaft gezeigt ist, kann die Verbindungslasche 117 von einem Ende des Randstücks 116 abgebogen sein und beispielsweise einen dreieckeförmigen Umfang aufweisen.

Wie in Fig. 18 beispielhaft gezeigt ist, kann der Basisträger 2 des Verbinders 1 den ersten Steg 2A und den zweiten Steg 2B aufweisen, wobei der erste und der zweite Steg 2A, 2B einen T-förmigen Querschnitt des Basisträgers 2 definieren. Der erste Verbindungsabschnitt 4 kann wie anhand der Fign. 3 bis 6 beschrieben realisiert sein. Der erste Verbindungsabschnitt 4 ist somit in der ersten Verbinderquerrichtung C11 orientiert bzw. steht der Quersteg 43 des ersten Verbindungsabschnitts 4 zu einer ersten Seite von dem ersten Steg 2A des Basisträgers 2 ab. Der zweite Verbindungsabschnitt 6 ist plattenförmig realisiert und kann beispielsweise durch eine zweite Seite des ersten Stegs 2A des Basisträgers 2 realisiert sein, an welcher die Anlagefläche 60c zur Anlage an den Spant 110 vorgesehen ist. Somit kann der zweite Verbindungsabschnitt 6 in der ersten Verbinderquerrichtung C11 orientiert sein.

Wie in Fig. 18 erkennbar, kann die an dem ersten Steg 2A des Basisträgers 2 vorgesehene Anlagefläche 60c des plattenförmigen zweiten Verbindungsabschnitts 6 an der Lasche 117 des Randstücks 116 anliegen. Der zweite Verbindungsabschnitt 6 und die Lasche 117 des Randstücks 116 können beispielsweise durch Nieten 150 verbunden sein, wie dies in den Fign. 18 und 19 beispielhaft gezeigt ist. Selbstverständlich ist auch denkbar, dass die Lasche 117 und der zweite Verbindungsabschnitt 6 verschweißt, verklebt, verschraubt oder in ähnlicher Weise verbunden sind.

Fig. 20 zeigt beispielhaft eine Detailansicht einer weiteren Rumpfstruktur 500 im Kreuzungsbereich von Spant 110 und Stringer 120 in einer Blickrichtung entlang der Rumpflängsachse L100, wobei Spant 110 und Stringer 120 mit einem Verbinder 1 verbunden sind. Fig. 21 zeigt eine Schnittansicht der in Fig. 20 gezeigten Rumpfstruktur 500, die sich bei einem Schnitt entlang der in Fig. 20 eingezeichneten Linie A21-A21 ergibt.

Wie in den Fign. 20 und 21 beispielhaft dargestellt, kann die Rumpfstruktur 500 einen Spant 110, einen Stringer 115, eine Außenhaut 130 und eine Spantstütze 510 aufweisen.

Die in den Fign. 20 und 21 gezeigte Rumpfstruktur 500 weist grundsätzlich den anhand der Fig. 2 erläuterten Aufbau auf. In Fig. 2 ist beispielhaft ein Z- oder S-förmiger Stringer 120 gezeigt. Im Unterschied hierzu ist in den Fign. 20 und 21 ein Stringer 120 mit Ω-förmigem Querschnitt dargestellt.

Wie in Fig. 21 beispielhaft gezeigt ist, kann der Spant 110 beispielsweise einen C-förmigen Querschnitt aufweisen. Der Spant 110 kann insbesondere einen plattenförmigen Zentralsteg 111, einen an einem in Bezug auf die Rumpfradialrichtung R100 ersten, äußeren Ende des Zentralstegs 111 angeordneten stegförmigen Spantfuß 112 und einen an einem in Bezug auf die Rumpfradialrichtung R100 zweiten, inneren Ende des Zentralstegs 111 angeordneten stegförmigen Spantkopf 114 aufweisen, wobei sich der Spantkopf 114 und der Spantfuß 112 jeweils parallel zueinander auf einer ersten Seite des Zentralstegs 111 erstrecken. Die Stringerausnehmung 114 ist im Bereich des Spantfußes 112 ausgebildet. Wie in den Fign. 20 und 21 beispielhaft dargestellt ist, erstreckt sich der Stringer 120 durch die Stringerausnehmung 115 hindurch entlang der Rumpflängsachse L100.

Wie in den Fign. 20 und 21 weiterhin dargestellt ist, ist die sich flächig erstreckende Außenhaut 130 an dem Spantfuß 112 des Spants 110 und dem Stringer 120 befestigt.

Der Aufbau der Spantstütze 510 ist insbesondere in Fig. 22 erkennbar. Wie in Fig. 22 beispielhaft gezeigt, kann die Spantstütze 510 insbesondere einen Stützfuß 512, einen Stützträger 520, einen Verbindungsabschnitt 530 und einen oder mehrere optionale Anlageplatte 540 aufweisen.

Wie in Fig. 22 beispielhaft gezeigt ist, kann der Stützfuß 512 beispielsweise als plattenförmiges Bauteil realisiert sein, welches einen ebenen ersten Abschnitt 512A und einen zweiten Abschnitt 512B aufweist.

Wie in Fig. 22 gezeigt, erstreckt sich der Stützträger 520 von dem zweiten Abschnitt 512B des Stützfußes 512 aus und quer zu dem ersten Abschnitt 512A des Stützfußes 512. Der Stützträger 520 kann allgemein als Profilträger realisiert sein. Wie in Fig. 22 rein bespielhaft dargestellt ist, kann der Stützträger 520 beispielsweise einen ersten Steg 521 und einen sich quer zu dem ersten Steg 521 und diesen durchdringenden zweiten Steg 522 aufweisen, wobei der erste und der zweite Steg 521, 522 einen X- oder kreuzförmigen Querschnitt des Stützträgers 520 definieren. Es ist jedoch auch denkbar, dass der Stützträger 520 eine andere Querschnittsform aufweist, z.B. einen T-förmigen oder einen H-förmigen Querschnitt. Der Stützträger 520 und der Stützfuß 512 können insbesondere einstückig ausgebildet sein.

Der Verbindungsabschnitt 530 kann beispielsweise in einem abgewandt von der Stützplatte 512 gelegenen Endbereich 524 de Stützträgers 520 angeordnet sein, wie dies in Fig. 22 beispielhaft gezeigt ist. Der Verbindungsabschnitt 530 weist eine Kopplungsstruktur 534 auf, welche dazu ausgebildet ist, einen Endbereich eines Querschnitts des Spantkopfs 114 zu umgreifen. Der Verbindungsabschnitt 530 kann beispielsweise einstückig mit dem Stützträger 520 ausgebildet sein, wie dies in Fig. 22 beispielhaft gezeigt ist. Alternativ hierzu kann der Verbindungsabschnitt 530 auch als ein von dem Stützträger 520 separates und an diesem verriegeltes Teil ausgeführt sein, beispielsweise so wie dies anhand der Fign. 12 bis 15 im Detail erläutert wurde. Allgemein ist der Verbindungsabschnitt 530 mit dem Stützträger 520 verbunden.

Wie in Fig. 22 beispielhaft gezeigt ist, kann der Verbindungsabschnitt 530 beispielsweise einen Quersteg 536 aufweisen, welcher mit einem ersten Ende mit dem Endbereich 524 des Stützträgers 520 verbunden ist, insbesondere mit dem ersten Steg 521 des Stützträgers 520. Der Quersteg 536 erstreckt sich quer zu dem Stützträger 520, insbesondere zu dem ersten Steg 521 des Stützträgers 520. Wie in Fig. 22 beispielhaft dargestellt ist, kann sich der Quersteg 536 insbesondere parallel zu dem Stützfuß 512 erstrecken und gegenüberliegend zu dem ersten Abschnitt 512A des Stützfußes 512 angeordnet sein.

Die Kopplungsstruktur 534 des Verbindungsabschnitts 530 kann beispielsweise eine hakenförmige Struktur aufweisen, wie dies in Fig. 22 beispielhaft gezeigt ist. Die hakenförmige Struktur kann an einem abgewandt von dem Stützträger 520 gelegenen Bereich des Querstegs 536 angeordnet sein. Die in Fig. 22 beispielhaft dargestellte hakenförmig ausgebildete Kopplungsstruktur 534 kann einen Schlitz 538 definieren, welcher zu dem Stützträger 520 hin offen ist, so dass ein Endbereich eines Querschnitts des Spants 110 darin aufgenommen werden kann, z.B. ein Ende des stegförmigen Spantkopfes 114, wie dies in Fig. 21 beispielhaft gezeigt ist.

Alternativ oder zusätzlich zu der hakenförmigen Struktur kann die Kopplungsstruktur 5340 des Verbindungsabschnitts 530 auch einen sich von dem Ende des Querstegs 536 aus und entlang des Stützträgers 520 in Richtung des der Stützplatte 512 erstreckenden Längssteg (nicht gezeigt) aufweisen, ähnlich der in den Fign. 13 und 14 beispielhaft gezeigten Gestaltung des zweiten Verbindungsbereichs 6. Optional kann an einem abgewandt von dem Quersteg 536 gelegenen Ende des Längsstegs zusätzlich die hakenförmige Struktur ausgebildet sein.

Die in Fig. 22 beispielhaft gezeigte Spantstütze 510 ist mit zwei optionalen Anlageplatten 540 versehen. Selbstverständlich können auch nur eine Anlageplatte 540 oder mehr als zwei Anlageplatten 540 vorgesehen sein. Die Anlageplatte 540 weist eine ebene Anlagefläche 540a auf, welche optional mit einer Klebstoffschicht (nicht gezeigt) beschichtet sein kann. Die Anlagefläche 540a erstreckt sich quer zu der Stützplatte 512. Wie in Fig. 22 beispielhaft gezeigt ist, kann eine erste Anlageplatte 540 in einem an der Stützplatte 512 gelegenen ersten Endbereich 523 des Stützträgers 520 angeordnet sein und eine zweite Stützplatte 540 kann in dem abgewandt von der Stützplatte 512 gelegenen zweiten Endbereich 524 des Stützträgers 520 angeordnet sein. Allgemein kann die Stützplatte 540 zwischen dem Stützfuß 512 und dem Verbindungsabschnitt 530 angeordnet sein. Die Stützplatte 540 kann beispielsweise einstückig mit dem Stützträger 520 ausgebildet sein und ist allgemein mit diesem verbunden.

Wie in Fig. 21 beispielhaft dargestellt ist, kann der Stützfuß 512 teilweise zwischen der Außenhaut 130 und dem Spantfuß 112 angeordnet sein. Insbesondere kann der erste Abschnitt 512A des Stützfußes 512 zwischen der Außenhaut 130 und dem Spantfuß 112 angeordnet sein. Wie in Fig. 21 ferner dargestellt ist, ist das Ende des stegförmigen Spantkopfes 114 in dem Schlitz 538 der hakenförmigen Kopplungsstruktur 534 des Verbindungsabschnitts 530 angeordnet. Somit umgreift die Kopplungsstruktur 534 einen Endbereich eines Querschnitts des Spantkopfs 114.

Fig. 22 zeigt schematisch die Montage der Spantstütze 510 an dem Spant 110. Zunächst wird die Spantstütze 510 auf der zweiten Seite des Spants angeordnet, die entgegengesetzt zu der ersten Seite des Zentralstegs 111 des Spants 110, von welcher der Spantfuß 112 und der Spantkopf 114 vorstehen, gelegen ist. Die Spantstütze 510 ist hierbei derart ausgerichtet, dass der erste Abschnitt 512A des Spantfußes 512, der Verbindungsabschnitt 530 und die optionalen Anlageplatten 540 dem Spant 110 zugewandt sind. Wie durch den Pfeil P22 symbolisch angedeutet, wird die Spantstütze 510 in Richtung des Spants 510 bewegt, wobei der erste Abschnitt 512A des Stützfußes 512 überlappend über den Spantfuß 112 und der Verbindungsabschnitt 530 überlappend über den Spantkopf 114 geschoben werden, bis die hakenförmige Kopplungsstruktur 534 mit dem Ende des Spantkopfes 114 verrastet und die optionalen Stützplatten an dem Zentralsteg 111 des Spants 110 anliegen, wie dies in Fig. 21 beispielhaft gezeigt ist.

Obwohl die vorliegende Erfindung vorstehend anhand von Ausführungsbeispielen exemplarisch erläutert wurde, ist sie darauf nicht beschränkt, sondern auf vielfältige Weise modifizierbar.

### BEZUGSZEICHENLISTE

- 1: Verbinder
- 2: Basisträger
- 4: erster Verbindungsabschnitt
- 6: zweiter Verbindungsabschnitt
- 7: Klebstoffträger
- 7a: Oberfläche des Klebstoffträgers
- 8: Befestigungsstruktur

- 21: erster Endbereich des Basisträgers
- 21E: erstes Ende des Basisträgers
- 22: zweiter Endbereich des Basisträgers
- 28: Führung
- 28A: Verriegelungsstruktur
- 29: Führungssteg
- 40: Kopplungsstruktur des ersten Verbindungsabschnitts
- 42: Endbereich des ersten Verbindungsabschnitts
- 43: Quersteg des ersten Verbindungsabschnitts
- 43A: erste Ende des Querstegs
- 43B: zweites Ende des Querstegs
- 44: Längssteg des ersten Verbindungsabschnitts
- 44B: Ende des Querstegs
- 44C: Umbug
- 44S: Spalt
- 60: Kopplungsstruktur des zweiten Verbindungsabschnitts
- 60A: hakenförmige Struktur
- 60B: Flansch
- 60c: Anlagefläche
- 62: Endbereich des zweiten Verbindungsabschnitts
- 63: Führungsbereich
- 63A: Verriegelungsstruktur
- 66: Quersteg des zweiten Verbindungsabschnitts
- 66A: erstes Ende des Querstegs
- 66B: zweites Ende des Querstegs
- 67: Längssteg des zweiten Verbindungsabschnitts
- 68: Führungssteg
- 70: Klebstoffschicht
- 80: Ausnehmungen

- 100: Rumpfstruktur

- 110: Spant
- 111: Zentralsteg des Spants
- 112: Spantfuß
- 114: Spantkopf
- 115: Stringerausnehmung
- 116: Randstück
- 117: Lasche
- 120: Stringer
- 121: Zentralsteg
- 122: Fußsteg
- 123: Kopfsteg
- 130: Außenhaut
- 150: Nieten

- 200: Luftfahrzeug
- 210: Rumpf
- 220: Flügel
- 230: Seitenleitwerk
- 240: Höhenleitwerk

- 500: Rumpfstruktur
- 510: Spantstütze
- 512: Stützfuß
- 512A: erster Abschnitt des Stützfußes
- 512B: zweiter Abschnitt des Stützfußes
- 520: Stützträger
- 530: Verbindungsabschnitt
- 532: Endbereich
- 534: Kopplungsstruktur
- 536: Quersteg
- 538: Schlitz

- C11: erste Verbinderquerrichtung
- C12: zweite Verbinderquerrichtung
- L1: Verbinderlängsrichtung
- L100: Rumpflängsachse
- P9: Pfeil
- P11: Pfeil
- P22: Pfeil
- R100: Rumpfradialrichtung

## Patentansprüche

1. Verbinder (1) zum Verbinden eines Spants (110) mit einem sich quer zu diesem erstreckenden Stringer (120) einer Rumpfstruktur (100) eines Luftfahrzeugs (200), mit:
einem sich in einer Verbinderlängsrichtung (L1) erstreckenden Basisträger (2);
einem mit dem Basisträger (2) verbundenen und sich in einer ersten Verbinderquerrichtung (C11) erstreckenden ersten Verbindungsabschnitt (4), welcher in einem von dem Basisträger (2) abgewandten Endbereich (42) eine Kopplungsstruktur (40) zum Umgreifen eines Endbereichs eines Querschnitts des Stringers (120) aufweist; und
einem mit dem Basisträger (2) verbundenen zweiten Verbindungsabschnitt (6), welcher zur Verbindung mit dem Spant (110) ausgebildet ist;
wobei der zweite Verbindungsabschnitt (6) in einer zweiten Verbinderquerrichtung (C12) orientiert ist; und
wobei der zweite Verbindungsabschnitt (6) in Bezug auf die Verbinderlängsrichtung (L1) in einem zweiten Endbereich (22) des Basisträgers (2) angeordnet ist und sich in der zweiten Verbinderquerrichtung (C12) erstreckt, und wobei der zweite Verbindungsabschnitt (6) in einem von dem Basisträger (2) abgewandten Endbereich (62) eine Kopplungsstruktur (60) zum Umgreifen eines Endbereichs eines Querschnitts des Spants (110) aufweist.

2. Verbinder (1) nach Anspruch 1, wobei der zweite Verbindungsabschnitt (6) einstückig mit dem Basisträger (2) ausgebildet ist.

3. Verbinder (1) nach Anspruch 1, wobei der zweite Verbindungsabschnitt (6) einen Führungsbereich (63) aufweist, welcher in einer Führung (28) des Basisträgers (2) in der Verbinderlängsrichtung (L1) verschiebbar geführt ist, und wobei die Führung (28) eine erste Verriegelungsstruktur (28A), insbesondere einen elastischen Steg, aufweist, welche in eine in dem Führungsbereich (63) ausgebildete Verriegelungsstruktur (63A), insbesondere in Form von Zähnen, eingreift.

4. Verbinder (1) nach einem der Ansprüche 1 bis 3, zusätzlich aufweisend:
einen plattenförmigen Klebstoffträger (7) mit einer in der zweiten Verbinderquerrichtung (C12) orientierten Oberfläche (7a), welche mit einem Klebstoff (70) beschichtet ist;
wobei der Klebstoffträger (7) in Bezug auf die Verbinderlängsrichtung (L1) zwischen dem ersten und dem zweiten Verbindungsabschnitt (4; 6) angeordnet und mit dem Basisträger (2) verbunden ist.

5. Verbinder (1) nach Anspruch 1, wobei der zweite Verbindungsabschnitt (6) plattenförmig zur Anlage an einen plattenförmigen Bereich des Spants (110) ausgebildet ist.

6. Verbinder (1) nach Anspruch 5, wobei der zweite Verbindungsabschnitt (6) in Bezug auf die Verbinderlängsrichtung (L1) in einem zweiten Endbereich (22) des Basisträgers (2) angeordnet ist.

7. Verbinder (1) nach einem der voranstehenden Ansprüche, wobei der erste Verbindungsabschnitt (4) einen sich in der ersten Verbinderquerrichtung (C11) erstreckenden Quersteg (43) aufweist, welcher mit einem ersten Ende (43A) mit dem Basisträger (2) verbunden ist,
wobei die Kopplungsstruktur (40) einen sich von einem zweiten Ende (43B) des Querstegs (43) aus entlang eines ersten Endbereichs (21) des Basisträgers (2) erstreckenden Längssteg (44) aufweist, welcher an einem abgewandt zu dem Quersteg (43) gelegenen Ende (44B) auf einer dem Basisträger (2) zugewandten Seite einen U-förmigen Umbug (44C) aufweist.

8. Rumpfstruktur (100) für ein Luftfahrzeug (200), mit
einem eine Rumpflängsachse (L100) umschließenden, insbesondere ringförmigen, Spant (110), welcher eine Stringerausnehmung (115) aufweist;
einem sich entlang der Rumpflängsachse (L100) durch die Stringerausnehmung (115) des Spants (110) hindurch erstreckenden Stringer (120); und
einem Verbinder (1) nach einem der voranstehenden Ansprüche;
wobei der erste Verbindungsabschnitt (4) des Verbinders (1) mit der Kopplungsstruktur (40) einen Endbereich eines Querschnitts des Stringers (120) umgreift; und
wobei der zweite Verbindungsabschnitt (6) des Verbinders (1) mit dem Spant (110) verbunden ist.

9. Rumpfstruktur (100) nach Anspruch 8, wobei der Stringer (120) einen S-förmigen Querschnitt aufweist, und
wobei die Kopplungsstruktur (40) den Endbereich des S-förmigen Querschnitts des Stringers (120) in Bezug auf eine senkrecht zur Rumpflängsachse (L100) stehende Rumpfradialrichtung (R100) umgreift.

10. Verfahren zum Verbinden eines Spants (110) und eines Stringers (120) einer Rumpfstruktur (100) nach einem der Ansprüche 8 oder 9, umfassend:
Einführen des Endbereichs des Querschnitts des Stringers (120) in die Kopplungsstruktur (40) des ersten Verbindungsabschnitts (4) des Verbinders (1);
Positionieren des zweiten Verbindungsabschnitts (6) des Verbinders (1) an dem Spant (110); und
Verbinden des zweiten Verbindungsabschnitts (6) des Verbinders (1) mit dem Spant (110).

11. Luftfahrzeug (200) mit einer Rumpfstruktur (100; 500) nach einem der Ansprüche 8 bis 9.

## Claims

1. A connector (1) for connecting a frame (110) to a stringer (120), extending transversely thereto, of a fuselage structure (100) of an aircraft (200), comprising:
a base beam (2) extending in a connector longitudinal direction (L1);
a first connecting portion (4) connected to the base beam (2) and extending in a first connector transverse direction (C11), which first connecting portion has, in an end region (42) facing away from the base beam (2), a coupling structure (40) for engaging around an end region of a cross section of the stringer (120); and
a second connecting portion (6) connected to the base beam (2), which second connecting portion is designed for connection to the frame (110);
wherein the second connecting portion (6) is oriented in a second connector transverse direction (C12); and
wherein the second connecting portion (6) is arranged in a second end region (22) of the base beam (2) with respect to the connector longitudinal direction (L1) and extends in the second connector transverse direction (C12), and wherein the second connecting portion (6) has, in an end region (62) facing away from the base beam (2), a coupling structure (60) for engaging around an end region of a cross section of the frame (110).

2. The connector (1) according to claim 1, wherein the second connecting portion (6) is formed integrally with the base beam (2).

3. The connector (1) according to claim 1, wherein the second connecting portion (6) has a guide region (63) which is guided displaceably in a guide (28) of the base beam (2) in the connector longitudinal direction (L1), and wherein the guide (28) has a first locking structure (28A), in particular an elastic web, which engages into a locking structure (63A), in particular in the form of teeth, formed in the guide region (63).

4. The connector (1) according to any one of claims 1 to 3, additionally comprising:
a plate-shaped adhesive carrier (7) having a surface (7a) oriented in the second connector transverse direction (C12), which surface is coated with an adhesive (70);
wherein the adhesive carrier (7) is arranged between the first and the second connecting portion (4; 6) with respect to the connector longitudinal direction (L1) and is connected to the base beam (2).

5. The connector (1) according to claim 1, wherein the second connecting portion (6) is formed in a plate-shaped manner for bearing against a plate-shaped region of the frame (110).

6. The connector (1) according to claim 5, wherein the second connecting portion (6) is arranged in a second end region (22) of the base beam (2) with respect to the connector longitudinal direction (L1).

7. The connector (1) according to any one of the preceding claims, wherein the first connecting portion (4) has a transverse web (43) extending in the first connector transverse direction (C11), which transverse web is connected to the base beam (2) by a first end (43A),
wherein the coupling structure (40) has a longitudinal web (44) extending from a second end (43B) of the transverse web (43) along a first end region (21) of the base beam (2), which longitudinal web has a U-shaped bend (44C) on a side facing the base beam (2) at an end (44B) located facing away from the transverse web (43).

8. A fuselage structure (100) for an aircraft (200), comprising
an, in particular annular, frame (110) enclosing a fuselage longitudinal axis (L100), which frame has a stringer recess (115);
a stringer (120) extending along the fuselage longitudinal axis (L100) through the stringer recess (115) of the frame (110); and
a connector (1) according to any one of the preceding claims; wherein the first connecting portion (4) of the connector (1) engages with the coupling structure (40) around an end region of a cross section of the stringer (120); and
wherein the second connecting portion (6) of the connector (1) is connected to the frame (110).

9. The fuselage structure (100) according to claim 8, wherein the stringer (120) has an S-shaped cross section, and
wherein the coupling structure (40) engages around the end region of the S-shaped cross section of the stringer (120) with respect to a fuselage radial direction (R100) perpendicular to the fuselage longitudinal axis (L100).

10. A method for connecting a frame (110) and a stringer (120) of a fuselage structure (100) according to any one of claims 8 or 9, comprising:
introducing the end region of the cross section of the stringer (120) into the coupling structure (40) of the first connecting portion (4) of the connector (1);
positioning the second connecting portion (6) of the connector (1) on the frame (110); and
connecting the second connecting portion (6) of the connector (1) to the frame (110).

11. An aircraft (200) comprising a fuselage structure (100; 500) according to any one of claims 8 to 9.

## Revendications

1. Connecteur (1) destiné à relier un longeron (110) à une lisse (120) s'étendant transversalement à celui-ci d'une structure de fuselage (100) d'un aéronef (200), comprenant :
une poutre de base (2) s'étendant dans une direction longitudinale de connecteur (L1) ;
une première section de liaison (4) reliée à la poutre de base (2) et s'étendant dans une première direction transversale de connecteur (C11), qui présente, dans une région d'extrémité (42) opposée à la poutre de base (2), une structure de couplage (40) destinée à entourer une région d'extrémité d'une section transversale de la lisse (120) ; et
une deuxième section de liaison (6) reliée à la poutre de base (2), qui est réalisée pour la liaison au longeron (110) ;
la deuxième section de liaison (6) étant orientée dans une deuxième direction transversale de connecteur (C12) ; et
la deuxième section de liaison (6) étant disposée par rapport à la direction longitudinale de connecteur (L1) dans une deuxième région d'extrémité (22) de la poutre de base (2) et s'étendant dans la deuxième direction transversale de connecteur (C12), et la deuxième section de liaison (6) présentant, dans une région d'extrémité (62) opposée à la poutre de base (2), une structure de couplage (60) destinée à entourer une région d'extrémité d'une section transversale du longeron (110).

2. Connecteur (1) selon la revendication 1, la deuxième section de liaison (6) étant réalisée d'une seule pièce avec la poutre de base (2).

3. Connecteur (1) selon la revendication 1, la deuxième section de liaison (6) présentant une région de guidage (63) qui est guidée de manière déplaçable dans un guide (28) de la poutre de base (2) dans la direction longitudinale de connecteur (L1), et le guide (28) présentant une première structure de verrouillage (28A), en particulier une nervure élastique, qui vient en prise dans une structure de verrouillage (63A) réalisée dans la région de guidage (63), en particulier sous la forme de dents.

4. Connecteur (1) selon l'une quelconque des revendications 1 à 3, présentant en outre :
un support de colle (7) en forme de plaque avec une surface (7a) orientée dans la deuxième direction transversale de connecteur (C12), qui est revêtue d'une colle (70) ;
le support de colle (7) étant disposé par rapport à la direction longitudinale de connecteur (L1) entre la première et la deuxième section de liaison (4 ; 6) et étant relié à la poutre de base (2).

5. Connecteur (1) selon la revendication 1, la deuxième section de liaison (6) étant réalisée en forme de plaque pour l'application contre une région en forme de plaque du longeron (110).

6. Connecteur (1) selon la revendication 5, la deuxième section de liaison (6) étant disposée par rapport à la direction longitudinale de connecteur (L1) dans une deuxième région d'extrémité (22) de la poutre de base (2).

7. Connecteur (1) selon l'une quelconque des revendications précédentes, la première section de liaison (4) présentant une nervure transversale (43) s'étendant dans la première direction transversale de connecteur (C11), qui est reliée par une première extrémité (43A) à la poutre de base (2),
la structure de couplage (40) présentant une nervure longitudinale (44) s'étendant à partir d'une deuxième extrémité (43B) de la nervure transversale (43) le long d'une première région d'extrémité (21) de la poutre de base (2), qui présente, au niveau d'une extrémité (44B) située à l'opposé de la nervure transversale (43), sur un côté tourné vers la poutre de base (2), un repli en forme de U (44C).

8. Structure de fuselage (100) pour un aéronef (200), comprenant
un longeron (110), en particulier de forme annulaire, entourant un axe longitudinal de fuselage (L100), qui présente un évidement de lisse (115) ;
une lisse (120) s'étendant le long de l'axe longitudinal de fuselage (L100) à travers l'évidement de lisse (115) du longeron (110) ; et
un connecteur (1) selon l'une quelconque des revendications précédentes ;
la première section de liaison (4) du connecteur (1) entourant, avec la structure de couplage (40), une région d'extrémité d'une section transversale de la lisse (120) ; et
la deuxième section de liaison (6) du connecteur (1) étant reliée au longeron (110).

9. Structure de fuselage (100) selon la revendication 8, la lisse (120) présentant une section transversale en forme de S, et
la structure de couplage (40) entourant la région d'extrémité de la section transversale en forme de S de la lisse (120) par rapport à une direction radiale de fuselage (R100) perpendiculaire à l'axe longitudinal de fuselage (L100).

10. Procédé de liaison d'un longeron (110) et d'une lisse (120) d'une structure de fuselage (100) selon l'une quelconque des revendications 8 ou 9, comprenant :
l'introduction de la région d'extrémité de la section transversale de la lisse (120) dans la structure de couplage (40) de la première section de liaison (4) du connecteur (1) ;
le positionnement de la deuxième section de liaison (6) du connecteur (1) sur le longeron (110) ; et
la liaison de la deuxième section de liaison (6) du connecteur (1) au longeron (110).

11. Aéronef (200) comprenant une structure de fuselage (100 ; 500) selon l'une quelconque des revendications 8 à 9.
